# EUROPEAN PATENT APPLICATION

(11) **EP 3 702 979 A1**
(43) Date of publication of application: **02.09.2020**
(21) Application number: 18871622.9
(22) Date of filing: 20.08.2018
(51) Int. Cl.: G06Q 10/02, G01C 21/26, G06Q 50/10, G08G 1/09, G08G 1/0968

(54) **INFORMATION PROCESSING DEVICE, INFORMATION PROCESSING METHOD AND INFORMATION PROCESSING PROGRAM**

(30) Priority: 24.10.2017 JP 2017205282
(71) Applicant: Toshiba Memory Corporation, Tokyo 105-0023 (JP)
(72) Inventor: SHIRAKAWA, Masanobu, Tokyo 105-0023 (JP); KURONAGA, Marie, Tokyo 105-0023 (JP)
(74) Representative: Hoffmann Eitle
(86) International application number: PCT/JP2018/030699
(87) International publication number: WO 2019/082482

(57) **Abstract**

According to one embodiment, an information processing device reserves power stations to charge a battery of an electric vehicle. The information processing device includes: a reception section configured to receive first information indicating a remaining battery charge, second information indicating a destination, and third information indicating a route; a first search section configured to search for a recommended route to a destination; a second search section configured to search for a power station; a first determination section configured to determine whether or not the battery needs to be charged before arriving at the destination, based on the first information and the recommended route; and a reservation section configured to reserve a power station without waiting for a command from a user when the first determination section determines that the battery needs to be charged.

## Description

### FIELD

Embodiments described herein relate generally to an information processing device, information processing method, and information processing program.

### BACKGROUND

In recent years, electric-powered vehicles are coming into widespread use. To further enhance the widespread use, power station environments for charging the battery of electric vehicles need to be improved.

### Citation List

Patent Literature 1: Jpn. Pat. Appln. KOKAI Publication No. 2003-262525

### SUMMARY

### Technical Problem

An information processing device, information processing method, and information processing program that can efficiently make charging reservations are provided.

### Solution to Problem

An information processing device according to the present embodiment is to reserve a power station to charge the battery of an electric vehicle. The information processing device includes a reception section, a first search section, a second search section, a first determination section, and a reservation section. The reception section receives first information indicating a remaining battery charge of the electric vehicle, second information relating to a destination, and third information relating a route to the destination. The first search section searches for a recommended route to the destination based at least on the second information and the third information. The second search section searches for a power station located on the way to the destination. The first determination section determines whether the battery will need to be charged before arriving at the destination, based on the first information and the recommended route that has been found. When the first determination section determines that the battery will need to be charged, the reservation section reserves a power station found by the second search section, without waiting for a command from the user.

### BRIEF DESCRIPTION OF THE DRAWINGS

FIG. 1 is a conceptual diagram of an electric vehicle charging reservation system according to the first embodiment.
FIG. 2 is a block diagram of the electric vehicle charging reservation system according to the first embodiment.
FIG. 3 is a block diagram of the electric vehicle according to the first embodiment.
FIG. 4 is a block diagram of a smartphone according to the first embodiment.
FIG. 5 is a block diagram of a server according to the first embodiment.
FIG. 6A is a block diagram of the server according to the first embodiment.
FIG. 6B is a functional block diagram of the processor of the server according to the first embodiment.
FIG. 7 is a block diagram of the server according to the first embodiment.
FIG. 8 is a flowchart of a power station reservation method according to the first embodiment.
FIG. 9 is a flowchart of a route finding method according to the first embodiment.
FIG. 10 is a schematic diagram of a screen of a smartphone or car navigation system according to the first embodiment.
FIG. 11 is a schematic diagram of a screen of the smartphone or car navigation system according to the first embodiment.
FIG. 12 is a schematic diagram of a screen of the smartphone or car navigation system according to the first embodiment.
FIG. 13 is a schematic diagram of a screen of the smartphone according to the first embodiment.
FIG. 14 is a schematic diagram of a screen of the smartphone according to the first embodiment.
FIG. 15 is a schematic diagram of a screen of the smartphone according to the first embodiment.
FIG. 16 is a schematic diagram of a screen of the smartphone according to the first embodiment.
FIG. 17 is a schematic diagram of a screen of the smartphone according to the first embodiment.
FIG. 18 is a flowchart of a power station reservation method according to the second embodiment.
FIG. 19A is a functional block diagram of a server according to the third embodiment.
FIG. 19B is a flowchart of a power station reservation method according to the first example of the third embodiment.
FIG. 20 is a schematic diagram of a screen showing the reservation state of an electric vehicle according to the first example of the third embodiment.
FIG. 21 is a schematic diagram of a screen showing the reservation state of the electric vehicle according to the first example of the third embodiment.
FIG. 22 is a flowchart of a power station reservation method according to the second example of the third embodiment.
FIG. 23 is a schematic diagram of a screen showing the reservation state of an electric vehicle according to the second example of the third embodiment.
FIG. 24 is a schematic diagram of a screen showing the reservation state of the electric vehicle according to the second example of the third embodiment.
FIG. 25 is a schematic diagram of a screen showing the reservation state of the electric vehicle according to the second example of the third embodiment.
FIG. 26 is a block diagram of an electric vehicle charging reservation system according to the fourth embodiment.
FIG. 27 is a block diagram of a smartphone according to the fourth embodiment.
FIG. 28 is a flowchart of a power station reservation method according to the fourth embodiment.
FIG. 29 is a conceptual diagram of an electric vehicle charging reservation system according to the fifth embodiment.
FIG. 30 is a block diagram of the electric vehicle charging reservation system according to the fifth embodiment.
FIG. 31 is a block diagram of a car navigation system according to the fifth embodiment.
FIG. 32 is a flowchart of a power station reservation method according to the fifth embodiment.
FIG. 33 is a schematic diagram of a screen of the car navigation system according to the fifth embodiment.
FIG. 34 is a schematic diagram of a screen of the car navigation system according to the fifth embodiment.
FIG. 35 is a schematic diagram of a screen of the car navigation system according to the fifth embodiment.
FIG. 36 is a schematic diagram of a screen of the car navigation system according to the fifth embodiment.
FIG. 37 is a schematic diagram of a screen of the car navigation system according to the fifth embodiment.
FIG. 38 is a schematic diagram of a screen of the car navigation system according to the fifth embodiment.
FIG. 39 is a schematic diagram of a screen of the car navigation system according to the fifth embodiment.
FIG. 40 is a schematic diagram of a screen of the car navigation system according to the fifth embodiment.
FIG. 41 is a schematic diagram showing screens of the smartphone and the car navigation system according to the fifth embodiment.
FIG. 42 is a schematic diagram showing screens of the smartphone and the car navigation system according to the fifth embodiment.
FIG. 43 is a schematic diagram showing screens of the smartphone and the car navigation system according to the fifth embodiment.
FIG. 44 is a schematic diagram showing screens of the smartphone and the car navigation system according to the fifth embodiment.
FIG. 45 is a schematic diagram showing screens of the smartphone and the car navigation system according to the fifth embodiment.
FIG. 46 is a schematic diagram showing screens of the smartphone and the car navigation system according to the fifth embodiment.
FIG. 47 is a schematic diagram showing screens of the smartphone and the car navigation system according to the fifth embodiment.
FIG. 48 is a schematic diagram showing screens of the smartphone and the car navigation system according to the fifth embodiment.
FIG. 49 is a schematic diagram showing screens of the smartphone and the car navigation system according to the fifth embodiment.
FIG. 50 is a schematic diagram showing screens of the smartphone and the car navigation system according to the fifth embodiment.
FIG. 51 is a block diagram of an electric vehicle charging reservation system according to the sixth embodiment.
FIG. 52 is a block diagram of a car navigation system according to the sixth embodiment.
FIG. 53 is a flowchart of a power station reservation method according to the sixth embodiment.
FIG. 54 is a block diagram of an electric vehicle charging reservation system according to the sixth embodiment.
FIG. 55 is a block diagram of a car navigation system according to the sixth embodiment.
FIG. 56 is a flowchart of a power station reservation method according to the sixth embodiment.
FIG. 57 is a block diagram of an electric vehicle charging reservation system according to a modification example of the first to sixth embodiments.
FIG. 58 is a block diagram of an electric vehicle and a power station according to a modification example of the first to sixth embodiments.
FIG. 59 is a schematic diagram of a screen of the car navigation system according to a modification example of the first to sixth embodiments.
FIG. 60 is a schematic diagram of a screen of the car navigation system according to a modification example of the first to sixth embodiments.
FIG. 61 is a schematic diagram of a screen of the car navigation system according to a modification example of the first to sixth embodiments.
FIG. 62 is a schematic diagram of a screen of the car navigation system according to a modification example of the first to sixth embodiments.
FIG. 63 is a schematic diagram of a screen of the car navigation system according to a modification example of the first to sixth embodiments.
FIG. 64 is a schematic diagram of a screen of the car navigation system according to a modification example of the first to sixth embodiments.
FIG. 65 is a schematic diagram of a screen of the car navigation system according to a modification example of the first to sixth embodiments.
FIG. 66 is a schematic diagram of a screen of the car navigation system according to a modification example of the first to sixth embodiments.

### DETAILED DESCRIPTION

The embodiments of the present invention will be explained with reference to the drawings. In the following explanation, components having the same functions and structures will be referred to by the same reference numerals.

### 1. First Embodiment

An information processing device, information processing method, and information processing program according to a first embodiment will be explained. This embodiment relates to a reservation system of a power station for an electric vehicle.

### 1.1 Structure

### 1.1.1 Overall Structure

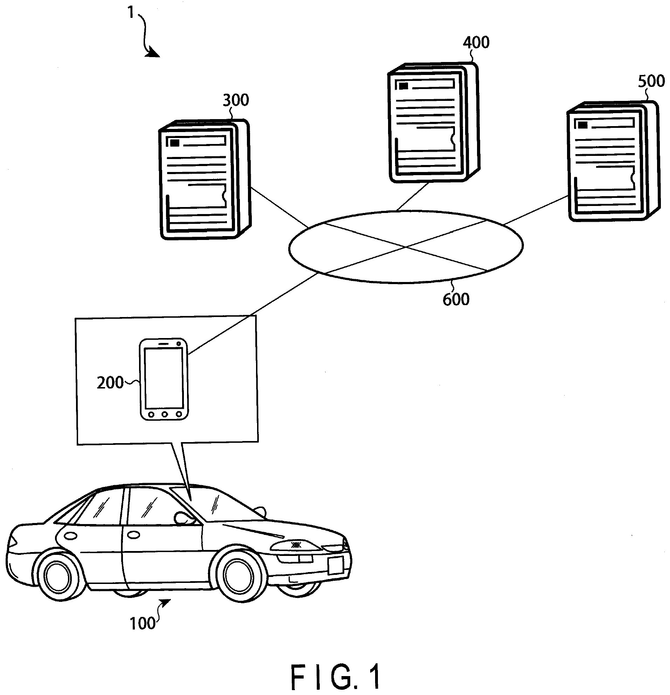

FIG. 1 shows an example of the overall structure of the reservation system according to the present embodiment. As illustrated in this drawing, a reservation system 1 includes an electric vehicle 100, a portable information terminal 200, servers 300, 400, and 500. In the following explanation, a smartphone 200 will be discussed by way of example of a portable information terminal. However, any portable information communication terminal may be adopted such as a cellular phone, tablet PC, or notebook PC. The smartphone 200 is configured to communicate with servers 300, 400, and 500 via a network 600, for example over wireless communications.

The electric vehicle 100 is also provided with a wireless communication function, and is configured to communicate with the servers 300, 400, and 500 via the network 600.

The servers 300, 400, and 500 perform various computations in response to a request from the electric vehicle 100 and smartphone 200, and provide the electric vehicle 100 and smartphone 200 with various types of information.

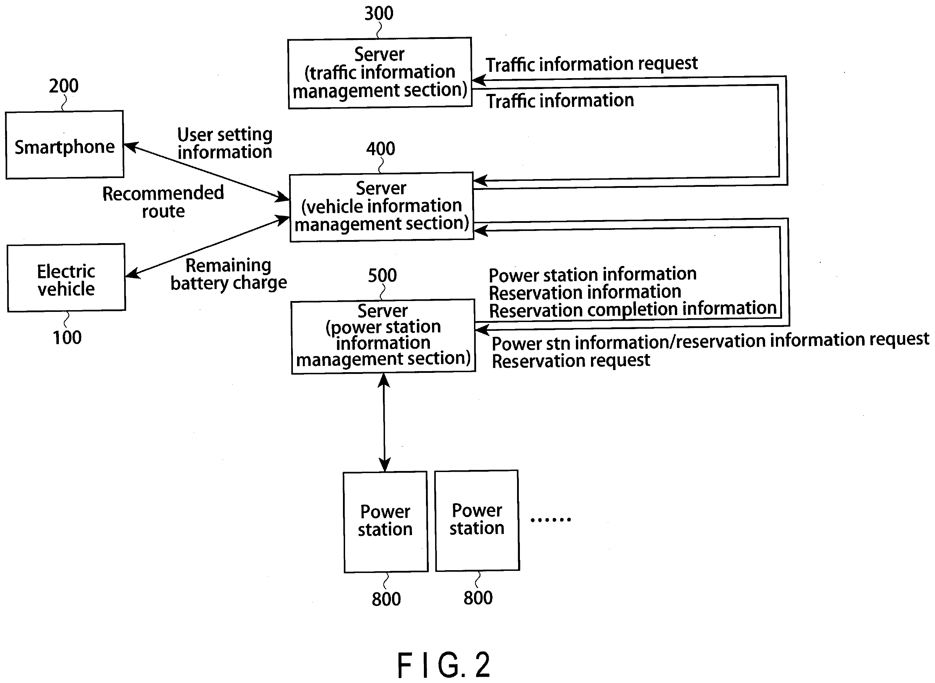

FIG. 2 is a block diagram of the reservation system 1 illustrated in FIG. 1. As illustrated in this drawing, the smartphone 200 receives various types of setting information from the user, and transmits the received information (user setting information) to the server 400. The smartphone 200 receives information related to recommended routes from the server 400.

The electric vehicle 100 transmits information related to a remaining battery charge to the server 400 upon request from the server 400.

The server 300 holds traffic information. The server 300 transmits the traffic information upon request from the server 400. The traffic information includes not only the current traffic information, but also any travel information including expected traffic congestion information, accident information, disaster-related road closure information, and such information is sent to the server 400. Furthermore, the traffic information is not limited to travel information, and may include road information that can affect the consumption speed of a battery 110, such as mountain roads and expressways.

The server 500 holds information concerning power stations for an electric vehicle. Such information includes power station information that indicates positional information of power stations at multiple locations, and reservation information that indicates the reservation state of each power station. The server 500 transmits the power station information and reservation information upon request of the server 400, and receives a reservation of a power station from the server 400. When receiving a reservation, the server 500 updates the reservation information, and transmits reservation completion information to the server 400. Due to the space limitation, a "power station" may be indicated as "power st".

The server 400 manages the information of the electric vehicle 100. In particular, the server 400 computes a recommended route to the user's destination in accordance with the user setting information from the smartphone 200, battery charge information from the electric vehicle 100, traffic information from the server 300, and power station information from the server 500, and transmits recommended route information to the smartphone 200. Furthermore, the server 400 predicts whether the battery 110 will need to be charged on the recommended route, and if so, a temporary reservation and a finalized reservation of a power station are requested with respect to the server 500.

The server 300 may be offered by a public organization, the server 500 may be offered by a business entity that operates power stations, and the server 400 may be offered by a business entity that operates the reservation system. The providers of the servers 300, 400, and 500 are not limited thereto, and may be offered by any public or private entity.

Next, the electric vehicle 100, smartphone 200, and servers 300, 400, and 500 will be explained.

### 1.1.2 Structure of Electric Vehicle 100

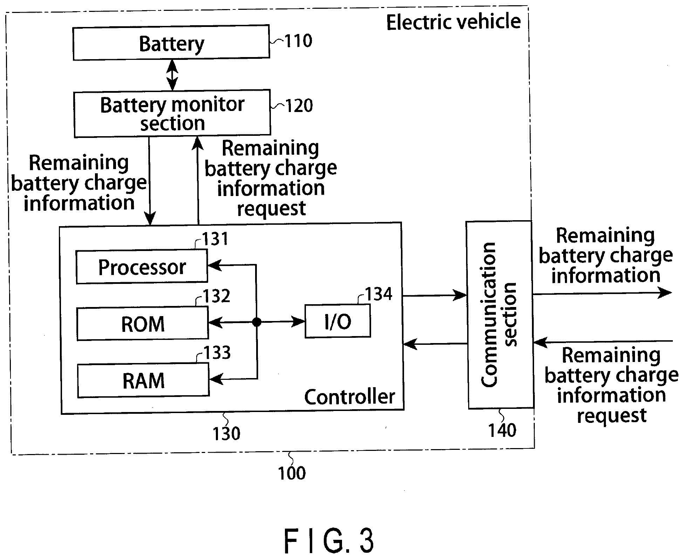

The structure of the electric vehicle 100 is explained with reference to FIG. 3. FIG. 3 is a block diagram of the electric vehicle 100 focusing on the portion that relates to the reservation system as an exemplary structure. As illustrated in this drawing, the electric vehicle 100 includes a battery 110, a battery monitor section 120, a controller 130, and a communication section 140.

The battery 110 is for powering the electric vehicle 100.

The battery monitor section (e.g., battery monitor circuit) 120 is configured to monitor the remaining charge of the battery 110. The remaining battery charge may be monitored continuously or at regular intervals. The battery monitor section 120 may count the number of charging times of the battery 110, because the battery 110 deteriorates with repeated charging. For this reason, the battery monitor section 120 monitors not only the remaining battery charge but also the deterioration degree of the battery 110, for example, by counting the number of charging times of the battery 110.

The communication section 140 may be a communication circuit that can transmit and receive information with respect to the server 400 by wireless communication. For example, the communication section 140 receives a remaining battery charge information request from the server 400. Then, the communication section 140 transmits to the server 400 the remaining battery charge information received from the controller 130. The remaining battery charge information may include, in addition to the remaining battery charge of the battery 110, information relating to the above-mentioned deterioration degree of the battery 110. By transmitting the information relating to the deterioration degree, the server 400 can improve accuracy in predicting the future consumption of the battery 110.

The controller 130 controls the process of the reservation system for the electric vehicle 100. The controller 130 contains a processor 131 such as a CPU that includes a control circuit or is constituted by a control circuit (the same applies to processors 231, 331, 431, 531, and 731 that will be discussed later), ROM 132, RAM 133, and input/output circuit 134. The ROM 132 stores programs to be implemented by the processor 131, and necessary data. The RAM 133 serves as a work area of the processor 131. The input/output circuit 134 controls the transmission/reception of information to and from the communication section 140. The processor 131, which implements a program in the ROM 132, implements the processing for the reservation system. For example, when receiving a request for remaining battery charge information by way of the input/output circuit 134, the processor 131 requests the currently remaining charge information of the battery 110 from the battery monitor section 120. In response, the battery monitor section 120 transmits the remaining battery charge information to the processor 131. Then, the processor 131 transmits the remaining battery charge information to the communication section 140. The processor 131 may transmit to the server 400 not only the currently remaining battery charge but also the expected value for the remaining battery charge of, for example, several hours later or several days later in response to a request from the server 400. Here, the processor 131 performs computation using the present battery consumption and the previous consumption rate of the battery, which are stored in the ROM 132 and RAM 133. In the following description, the term "remaining battery charge information" includes such information.

### 1.1.3 Structure of Smartphone 200

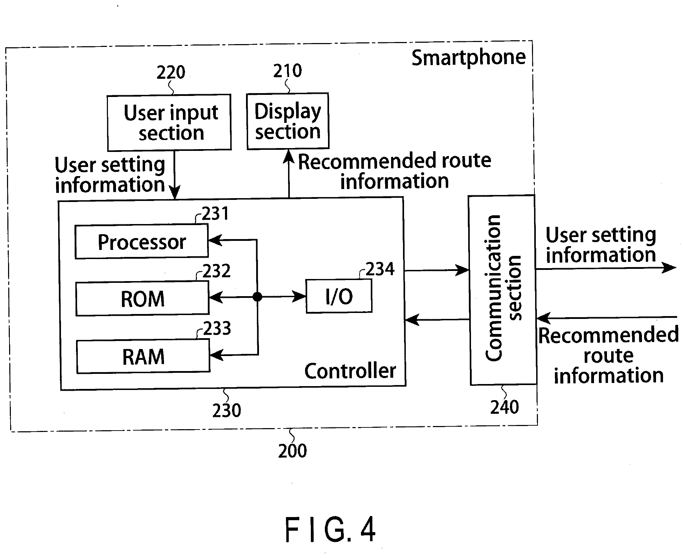

Next, the structure of the smartphone 200 is explained with reference to FIG. 4. In FIG. 4, a block diagram showing an exemplary structure of the smartphone 200 is presented. As illustrated in this drawing, the smartphone 200 includes a display section 210, a user input section 220, a controller 230, and a communication section 240.

The display section 210, which may be a liquid crystal display, presents various types of information to the user.

The user input section 220 receives inputs of various types of information and commands from the user (referred to as user setting information). For example, the display section 210 may be a touch-panel type display device, in which the display section 210 and the user input section 220 may be integrated.

The communication section 240 transmits and receives information with respect to the server 400 by wireless communication. For example, the communication section 240 transmits to the server 400 the user setting information received by the user input section 220, and receives recommended route information from the server 400.

The controller 230 controls the entire processing of the smartphone 200. The controller 230 includes a processor 231 such as a CPU, and also a ROM 232, a RAM 233, and an input/output circuit 234. The ROM 232 stores programs to be implemented by the processor 231, and necessary data. The RAM 233 serves as a work area of the processor 231. The input/output circuit 234 controls the transmission/reception of information to and from the communication section 240. By implementing a program in the ROM 232, the processor 231 realizes various functions of the smartphone 200 including the processing for the reservation system. For example, the processor 231 may cause the RAM 233 to store the user setting information received by the user input section 220. Examples of the user setting information include information relating to the date, time and destination, or priority for driving the electric vehicle 100. The priority here denotes whether to use expressways and charging rules of the battery 110 when searching for a route to a destination. Charging rules may be information indicative of a higher priority to be placed on the minimum remaining charge allowed for the battery 110, an acceptable time length for waiting at a power station, or the like.

### 1.1.4 Structure of Server 300

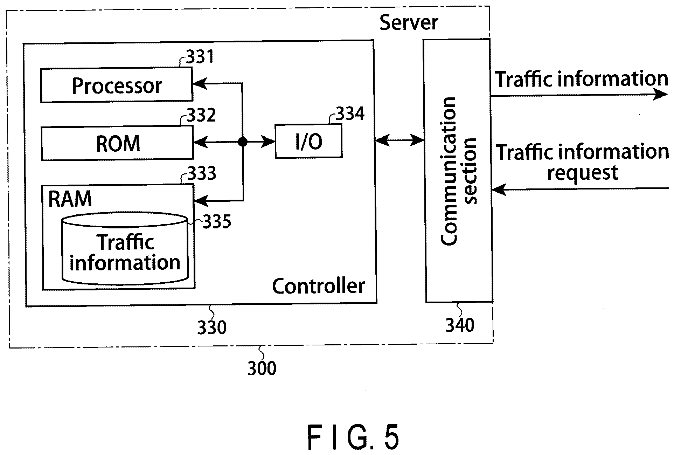

Next, the structure of the server 300 is explained with reference to FIG. 5. In FIG. 5, a block diagram showing an exemplary structure of the server 300 is presented. As illustrated in this drawing, the server 300 includes a controller 330 and a communication section 340.

The communication section 340 transmits and receives information to and from the server 400 by wireless communication. For example, the communication section 340 receives a traffic information request from the server 400. Then, the communication section 340 transmits the traffic information received from the controller 330, to the server 400.

The controller 330 holds the traffic information in real time. The controller 330 includes a processor 331 such as a CPU, and also a ROM 332, a RAM 333, and an input/output circuit 334. The ROM 332 stores programs to be implemented by the processor 331, and necessary data. The RAM 333 serves as a work area of the processor 331, and stores traffic information 335. The traffic information 335 may include not only the current state of traffic congestion but also traffic information of the past. This allows for future traffic prediction. As mentioned above, the "traffic information" in this specification includes not only traffic congestion-related information, but also various other traffic information such as accident information and current and future road closure information. The input/output circuit 334 controls information transmission/reception to and from the communication section 340. By implementing a program in the ROM 332, the processor 331 implements the processing for the reservation system. For example, when receiving a request for traffic information 335 via the input/output circuit 334, the processor 331 reads the traffic information 335 from the RAM 333, and transmits it to the server 400 via the communication section 340. Furthermore, the processor 331 may be configured to estimate traffic congestion corresponding to the current date and time, and transmit the obtained expected congestion information to the server 400.

### 1.1.5 Structure of Server 400

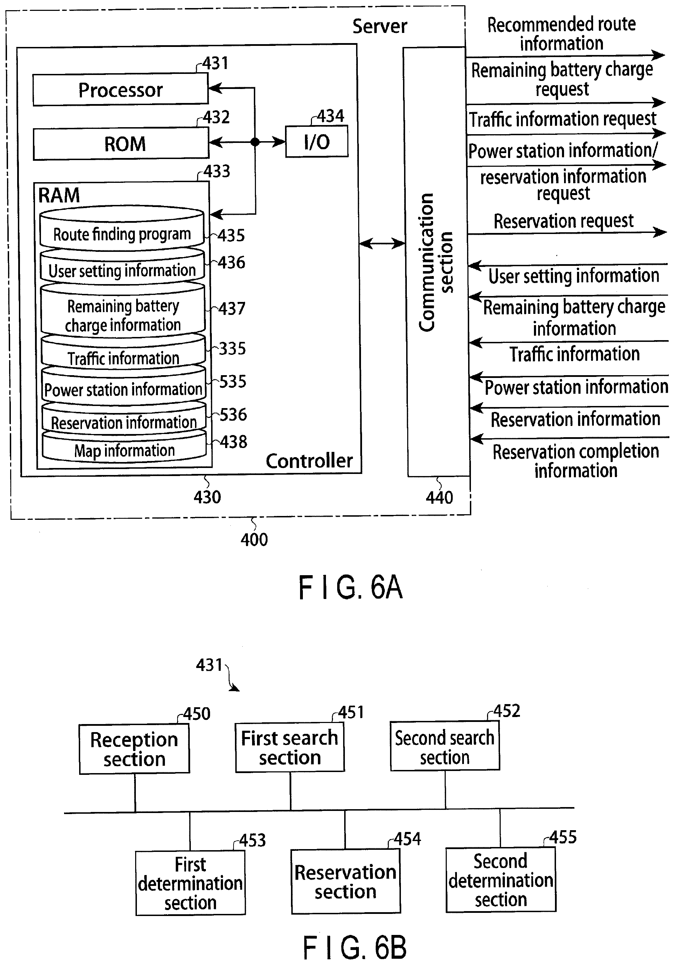

Next, the structure of the server 400 is explained with reference to FIG. 6A. In FIG. 6A, a block diagram showing an exemplary structure of the server 400 is presented. As illustrated in this drawing, the server 400 includes a controller 430 and a communication section 440.

The communication section 440 transmits and receives information to and from the electric vehicle 100, smartphone 200, server 300, and server 500 by wireless communication. With respect to the servers 300 and 500, wired communications may be performed. Alternatively, any two of, or all of, the servers 300, 400 and 500 may be realized by a single server. The communication section 440 transmits a request for the remaining battery charge information to the electric vehicle 100, transmits a request for traffic information to the server 300, transmits a request for power station information, a request for reservation information, and a reservation request, which will be described later, to the server 500, and transmits recommended route information to the smartphone 200. Furthermore, the communication section 440 receives remaining battery charge information from the electric vehicle 100, user setting information from the smartphone 200, traffic information from the server 300, and power station information, reservation information and reservation completion information from the server 500.

The controller 430 includes a processor 431 such as a CPU, and also a ROM 432, a RAM 433, and an input/output circuit 434. The ROM 432 stores programs to be implemented by the processor 331, and necessary data. The RAM 433 serves as a work area of the processor 431, and stores the user setting information 436, remaining battery charge information 437, traffic information 335, power station information 535, and reservation information 536 received by the communication section 440. In addition, the RAM 433 stores a route finding program 435 and map information 438. The input/output circuit 434 controls information transmission/reception to and from the communication section 440. The processor 431 implements the route finding program 435 using the above information 436, 437, 438, 335, 535 and 536, and thereby computes a recommended route that is likely to be the most suitable for the user. For example, the processor 431 may acknowledge the departure place and destination place on the map information 438, and compute a recommended route from among the routes that connect the two places, based on the earliest arrival time taking into account the traffic information 335, easiness of reserving a power station taking into account the remaining battery charge information 437, power station information 535 and reservation information 536, and preferences of the user as given by the user setting information 436. The recommended route information computed in this manner is transmitted to the smartphone 200. In addition, a power station reservation command is issued to the server 500, as needed. The power station reservation according to the embodiment includes a temporary reservation and a finalized reservation. In this example, a temporary reservation is a reservation that will be canceled unless it is finalized within a certain time frame and that can be made without the user's approval. On the other hand, a finalized reservation is a reservation that has been confirmed and that is valid unless it is canceled. A finalized reservation is made upon the user's approval. The forms of reservation are not limited thereto, and all of the "reservations" listed below may be finalized reservations. A temporary reservation may be designed such that it will be changed to a finalized reservation when the user does not confirm or negate finalization within a certain time frame. In the following example, the terms are defined as:
- A temporary reservation will be canceled unless finalized within a time frame, and may be made without the user's approval. It may be canceled upon a cancellation request.
- A finalized reservation is a confirmed reservation, for which cancellation requires a cancellation request. Finalization requires the user's approval.

When a temporary reservation and finalized reservation do not need to be distinguished from each other, they may be simply referred to as a "reservation".

FIG. 6B is a functional block diagram of the processor 431 (or entire controller 430) when implementing a route finding program 435. As illustrated in FIG. 6B, the processor 431 implements a program 435, thereby functioning as a reception section 450, first search section 451, second search section 452, first determination section 453, reservation section 454, and second determination section 455.

The reception section 450 receives, via the communication section 440, first information (remaining battery charge information 437) indicating the remaining charge of the battery 110 from the electric vehicle 100, second information (user setting information 436) relating to the destination from the smartphone 200, and third information (traffic information 335) relating to routes to the destination. The reception section 450 may receive the power station information 535, reservation information 536, and reservation completion information from the server 500.

The first search section 451 searches for a recommended route to the destination based at least on the second information 436 and third information 335. The second search section 452 searches for power stations on the way to the destination, which are available for reservation, based on the third information 335, power station information 535 and reservation information 536.

The first determination section 453 determines whether or not the battery 110 will need to be charged somewhere on the way to the destination, based on the first information 437 and the recommended route found by the first search section 451. If the first determination section determines that the battery 110 will need to be charged, the reservation section 454 makes a temporary reservation for one of the power stations that have been found by the second search section 452, without waiting for a command from the user.

The second determination section 455, the details of which will be provided later in the second embodiment, is configured to determine whether the electric vehicle 100 will be able to arrive at the power station as scheduled in the temporary reservation made by the reservation section 454, based at least on the third information 335. This determination does not have to be based only on the third information 335, but may be also based on the first information 437. If the second determination section 455 determines that the arrival at the power station as scheduled in the temporary reservation is not likely, the reservation section 454 cancels this reservation and makes another temporary reservation for the next recommended power station, without waiting for a command from the user.

### 1.1.6 Structure of Server 500

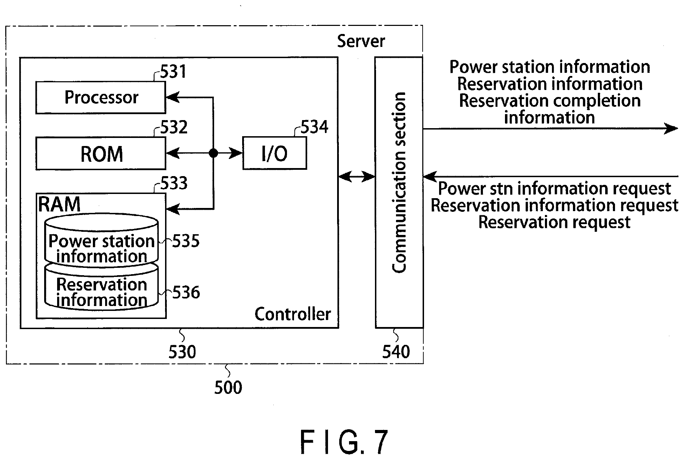

Next, the structure of the server 500 is explained with reference to FIG. 7. In FIG. 7, a block diagram showing an exemplary structure of the server 500 is presented. As illustrated in this drawing, the server 500 includes a controller 530 and a communication section 540.

The communication section 540 transmits and receives information to and from the server 400 by wireless communication. For example, the communication section 540 receives from the server 400 a request for power station information, a request for reservation information, and a request for a temporary reservation or finalized reservation. The communication section 540 transmits to the server 400 the power station information, reservation information, and reservation completion information received from the controller 530.

The controller 530 holds power station-related information in real time. That is, the controller 530 includes a processor 531 such as a CPU, and also a ROM 532, a RAM 533, and an input/output circuit 534. The ROM 532 stores programs to be implemented by the processor 531, and necessary data. The RAM 533 serves as a work area of the processor 531, and stores the power station information 535 and reservation information 536. The power station information 535 includes information regarding the locations of power stations, the number of vehicles that can be charged at a time, and time required for charging. The reservation information 536 includes the current reservation state of the power stations. Such information may be received by the communication section 540 from the power stations, and stored in the RAM 533. The input/output circuit 534 controls information transmission/reception to and from the communication section 540. The processor 531 implements the program stored in the ROM 532, and thereby executes processing relating to the reservation system. For example, when receiving a request for power station information and reservation information via the input/output circuit 534, the processor 531 reads the power station information 535 and reservation information 536 from the RAM 533, and transmits the information to the server 400 via the communication section 540. Furthermore, when receiving a temporary reservation request from the server 400, the processor 531 determines whether or not reservation is possible, by referring to the reservation information 536. If reservation is possible, the processor 531 enters a temporary reservation, and transmits it as reservation completion information to the server 400. This reservation information is transmitted to a corresponding power station by the communication section 540. If reservation is not possible, the information is transmitted to the server 400 to inform accordingly. In this case, information indicating available time slots may also be transmitted. The same processing is executed when receiving a finalized reservation request from the server 400. A temporary reservation may be canceled by the processor 531 upon receiving a command from the server 400, for example, if the user does not appear at the power station by the reservation time, or when there is apparently no chance that the user will arrive on time.

### 1.2 Operations

Next, the operation of the reservation system 1 for an electric vehicle power station according to the present embodiment is explained.

### 1.2.1 Overall Flow of Operations

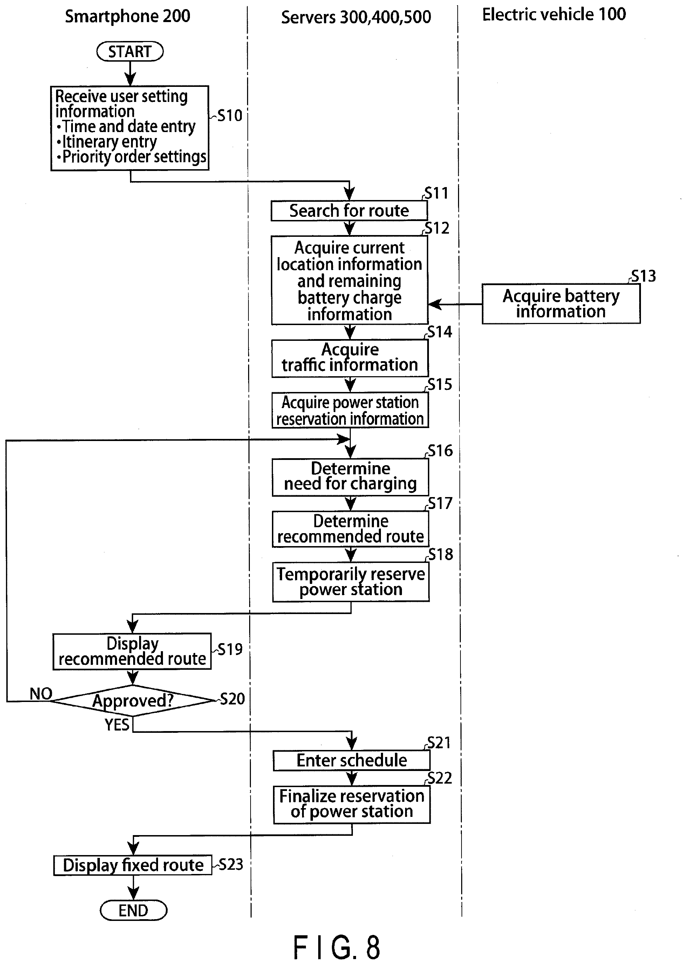

The overall flow of the reservation system is explained with reference to FIG. 8. The flowchart of FIG. 8 shows the operations of the smartphone 200, the server 400 (including the operations of the servers 300 and 500) and the electric vehicle 100 for reserving a power station when the user rides the electric vehicle 100, or when the user determines that he/she is going to ride the electric vehicle 100 (i.e., the riding may be, for example, a day after the determining). The following processing of the server 400 is realized mainly by the controller 430 when the processor 431 implements the program 435.

As illustrated in this drawing, the smartphone 200 first receives the user setting information from the user (step S10). That is, the smartphone 200 receives from the user a date and time entry, itinerary (destination and stopovers) entry, and priority setting. As mentioned above, an exemplary priority order may include information as to whether to use toll roads such as expressways, and also information of charging policies in route finding. For example, the following information may be included:
- The remaining charge of the battery 110 should be no less than 20%.
- In the case that the power station in the vicinity of the route is busy, even a power station located farther away, involving a detour, should be reserved to arrive at the destination earlier.
- Alternatively, a nearby power station, even if there may be a considerable waiting time, should be selected to reduce the charge consumption.

The smartphone 200 transmits this information 436 to the server 400, and the server 400 holds the received information 436 in the RAM 433. The server 400 (first search section 451) then starts finding a route (step S11). That is, using the GPS equipment of the electric vehicle 100 or smartphone 200 or according to the information input by the user, the server 400 acquires the current location of the user (electric vehicle 100), and also acquires the remaining battery charge information 437 from the electric vehicle 100 (steps S12 and S13). Thereafter, the server 400 acquires the traffic information 335 from the server 300 (step S14), and further acquires the power station information 535 and reservation information 536 from the server 500 (steps S14 and S15).

The server 400 (first determination section 453) determines whether charging is required (step S16). For this determination, the processor 431 uses the information acquired at steps S11 to S14. That is, a determination may be made based on whether the user can reach the destination with the currently remaining battery charge in consideration of the distance to the destination and the traffic condition, or whether the charging will be needed even if the user can reach the destination, in consideration of the user's charging policy. Thereafter, the processor 431 determines a recommended route to the destination, based on the result obtained at step S16 (step S17). If it is determined at step S16 that the charging will be needed, the processor 431 searches for power stations on the route determined at step S17 (second search section 452), and requests a temporary reservation for the most recommended one of the found power stations from the server 500 (reservation section 454, step S18). Here, the processor 431 (second search section 452) determines a recommended power station based on the power station information 535 and reservation information 536 received from the server 500. That is, if the currently remaining battery charge is extremely low, a temporary reservation will be made for a nearby power station even if the reservation information 536 indicates a long waiting time. On the other hand, if enough battery charge remains, a temporary reservation may be made for a power station that requires a shorter waiting time or a shorter charging time, even if the power station is located farther away from the current location. Alternatively, a temporary reservation may be made for a power station which will increase the traveling distance but will be the least busy, thereby enabling the earliest arrival at the destination. Thereafter, the server 400 transmits the recommended route information to the smartphone 200.

The smartphone 200 displays the received recommended route on the display section 210 (step S19). Here, the display section 210 displays the information regarding the temporarily reserved power station. When receiving an approval or denial of the temporary reservation of this power station, which has been made by the server 400, through the user input section 220 from the user (step S21), the smartphone 200 sends it to the server 400. If not approved (no at step S20), the processor 431 of the server 400 repeats the operations of steps S16 to S18. That is, the server 400 computes the next recommended route, and makes a temporary reservation for a power station, as needed.

After repeating the operations of steps S16 to S18, however, the route that has been rejected by the user may be found again. Thus, the processor 431 of the server 400 may be configured to attach a flag to the route rejected by the user so that the once-rejected route will not be re-suggested. In addition, or alternatively, the processor 431 of the server 400 may provide the priority order to the routes rejected by the user and the newly found routes. This priority order is the order of recommendations from the server 400 to the user. When providing the priority order, the operations of steps S16 to S18 may be repeated for several times in the flowchart of FIG. 8, and thereby a plurality of routes may be presented to the user at step S19, together with the priority order.

If there is a time lag between step S10 and the user's approval (step S20), or more specifically, if no approval is received within a threshold time period after the presentation of a recommended route, the server 400 executes the operations of steps S12 and S14, and further executes the operations of steps S16 to S18 to update the recommended routes.

When approved (step S21), the processor 431 enters the determined recommended route and power station information to the user setting information received at step S10 (step S21). Furthermore, the processor 431 of the server 400 (reservation section 454) changes the temporary reservation made at step S18 to a finalized reservation in the server 500 (step S22). The information relating to the temporary reservation and finalized reservation may be entered to the reservation information 536 in the server 500. When this entry is completed, the server 400 transmits the determined route information to the smartphone 200, and the smartphone 200 displays the received determined route on the display section 210 (step S23).

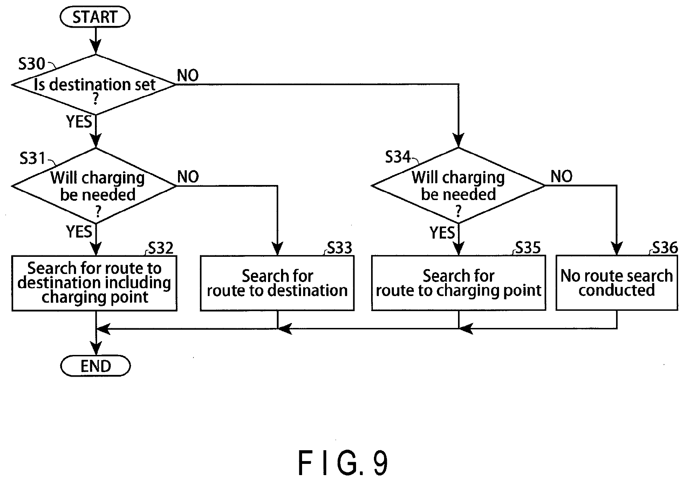

FIG. 9 shows the basic concept of the route finding on the server 400, and is a flowchart of the processing, in particular, in accordance with whether or not the battery 110 needs to be charged. The processing of FIG. 9 may be implemented by the first search section 451, second search section 452, and first determination section 453 of FIG. 6B.

As illustrated in this drawing, if a destination is set in the user setting information (yes at step S30), and if the processor 431 determines that the battery 110 needs to be charged (yes at step S31), the processor 431 searches for a route to the destination via a power station (step S32). If this is the case, a temporary reservation of the power station is made (reservation section 454), as discussed above. In contrast, if it is determined at step S31 that the battery 110 does not need to be charged (no at step S31), the processor 431 searches for a route to the destination, without considering as to whether or not to go via a power station (step S33).

The determination of the need for charging at steps S31 and S34 may be made by the user, instead of by the processor 431. In particular, the smartphone 200 may receive the need for charging from the user, and transmit this information to the server 400. In accordance with the received information, the server 400 may implement the operation at step S32, S33, S35, or S36.

If no destination is set at step S30 (no at step S30), and if it is determined that the battery 110 needs to be charged (yes at step S34), the processor 431 searches for a route to the most recommended power station (step S35). If this is the case, a temporary reservation is made for the power station. The most recommended power station may be the power station closest to the current location, or the power station that is not a nearby station but requires a shorter waiting time. If no destination is set (no at step S30), and if the battery 110 does not need to be charged (no at step S34), the processor 431 does not perform route finding (step S36).

### 1.2.2 Exemplary Operations

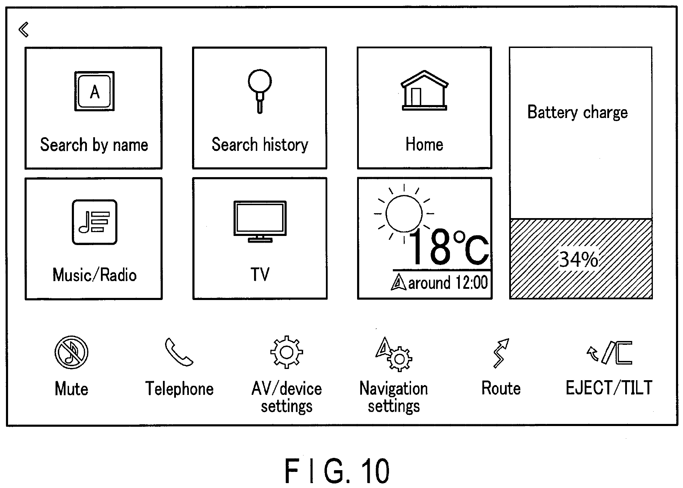

Now, exemplary operations for the processing of FIG. 8 are explained. FIG. 10 shows an exemplary display screen of the instrumental panel of the electric vehicle (or display screen (home screen) of a car navigation system). The screen of FIG. 10 may be displayed on the display section 210 of the smartphone 200 if the smartphone 200 can receive the battery charge information 437. As illustrated in this drawing, the present charge level of the battery 110 is displayed on the display screen. In the example of FIG. 10, the charge level of the battery 110 is 34%, which means that the remaining charge is only approximately one third of the fully charged state.

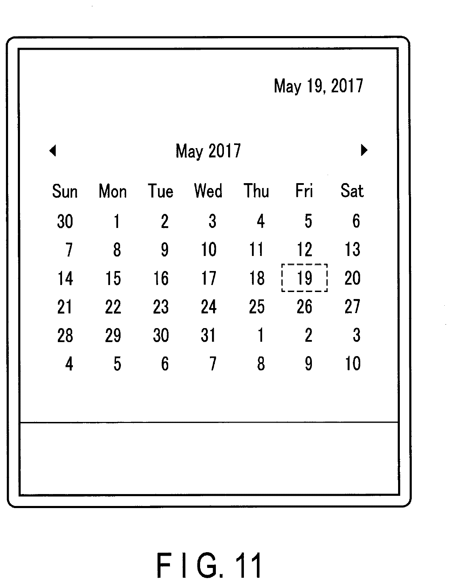

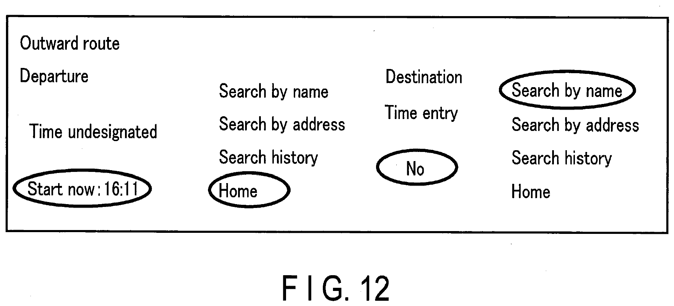

FIGS. 11 and 12 show exemplary display screens of the display section 210 of the smartphone 200, presenting the state at step S10 in FIG. 8. The displays of FIGS. 11 and 12 are presented when activating an application of the reservation system 1, which will be explained in this example. The application of the reservation system is realized, for example, when the processor 231 implements a program stored in the RAM 133.

When the application is implemented, the display section 210 displays a calendar as illustrated in FIG. 11, and the date of ride on the electric vehicle 100 is received from the user. FIG. 12 shows an exemplary screen for entering an outward route. In the example of FIG. 12, a departure time and destination can be set. When such information is input, the information is transmitted to the server 400 as user setting information 436.

A certain electric vehicle 100 or multiple electric vehicles 100 are registered in advance by users on the application downloaded on the smartphone 200. The dates of ride and schedule of charging timings may be shared by multiple application users. This exemplary case will be explained in the third embodiment.

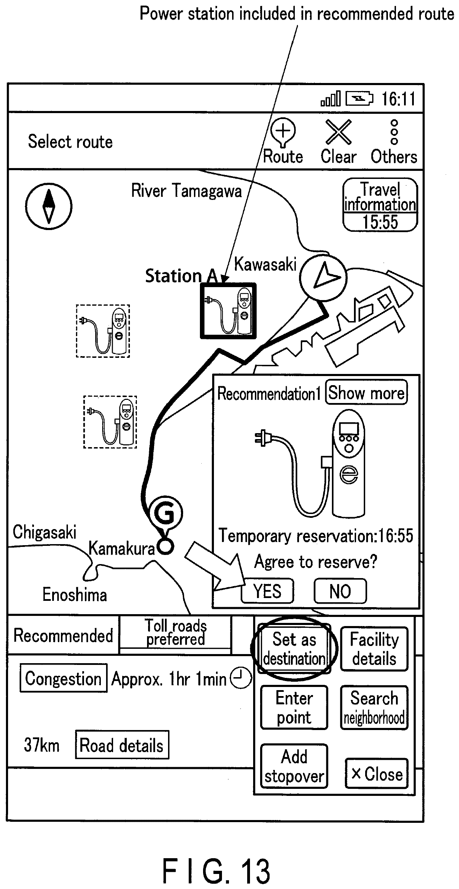

FIG. 13 shows an exemplary display of the display section 210 of the smartphone 200, on which a recommended route is indicated as explained at step S19 in FIG. 8. In the example of FIG. 13, the departure place is set to Kawasaki, and the destination is set to Kamakura. The heavy line in this drawing indicates the recommended route. The server 400 further recommends the power station (Station A) closest to Kawasaki, and makes a temporary reservation for 16:55, without waiting for the user's approval. This temporary reservation is made by the server 400 in the process of computing the recommended route. At this point, the reservation is made temporarily, and therefore the smartphone 200 prompts the user to enter as to whether the reservation can be finalized.

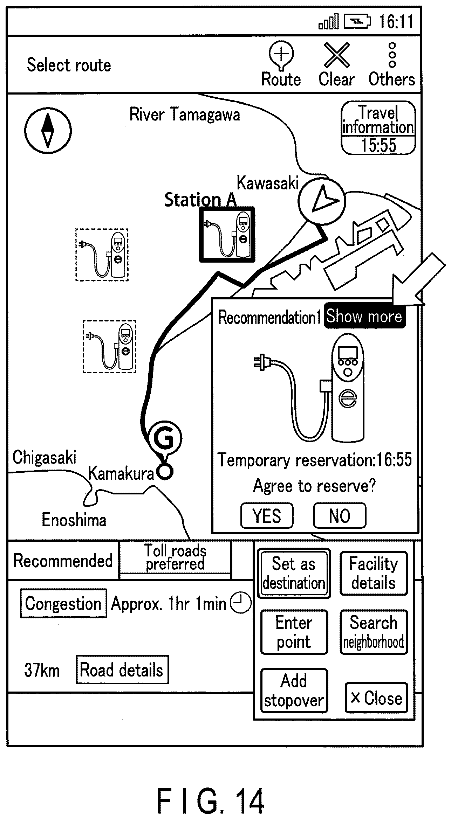

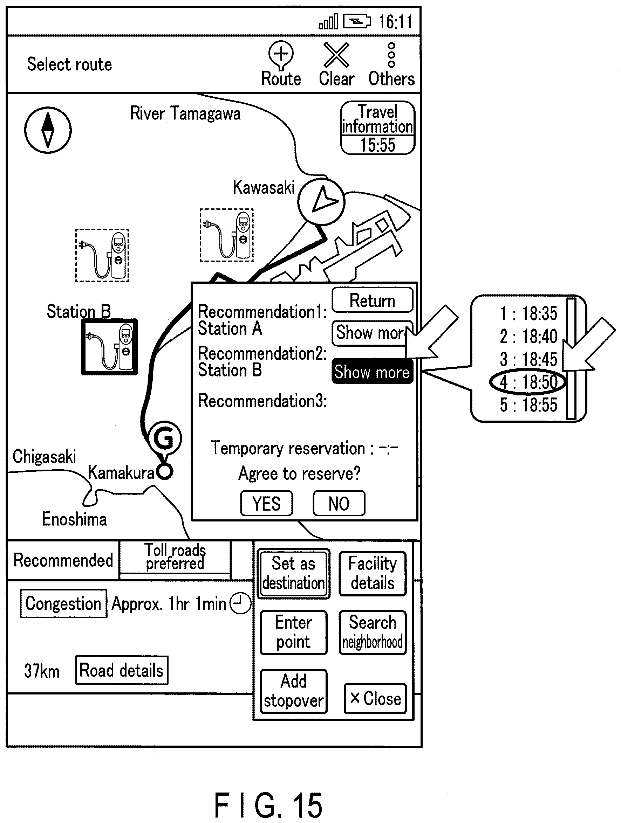

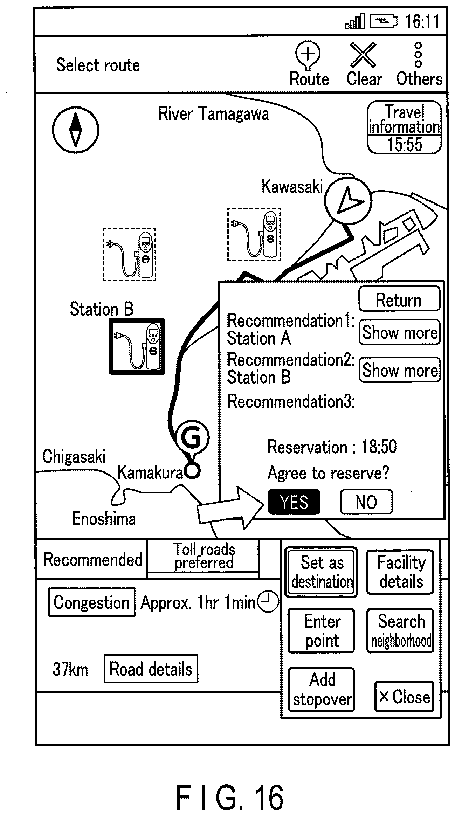

If the user desires a power station other than Station A, the user may select an icon "Show more" on the display section 210, as illustrated in FIG. 14. When this icon is selected, the smartphone 200 displays other recommended routes computed by the server 400, as illustrated in FIG. 15. As illustrated in this drawing, the second recommended route includes a power station (Station B) that is located farther away than Station A. In FIG. 15, a temporary reservation is not made for Station B. The server 400 may make a temporary reservation of Station B at this point. If the icon "Show more" for Station B is selected as illustrated in FIG. 15, available reservation time slots are displayed. This information is displayed based on the reservation information 536 regarding Station B, which is received by the server 400 from the server 500. It is assumed here that, of these time slots, a selected time slot of 18:50 is received from the user. Then, the smartphone 200 transmits this information to the server 400, and, a temporary reservation is made on the server 500, as needed. Thereafter, the smartphone 200 prompts the user to enter as to whether the reservation can be finalized. In the example of FIG. 16, when the icon "YES" is selected, the server 400 finalizes the reservation in the server 500, regarding Station B at 18:50.

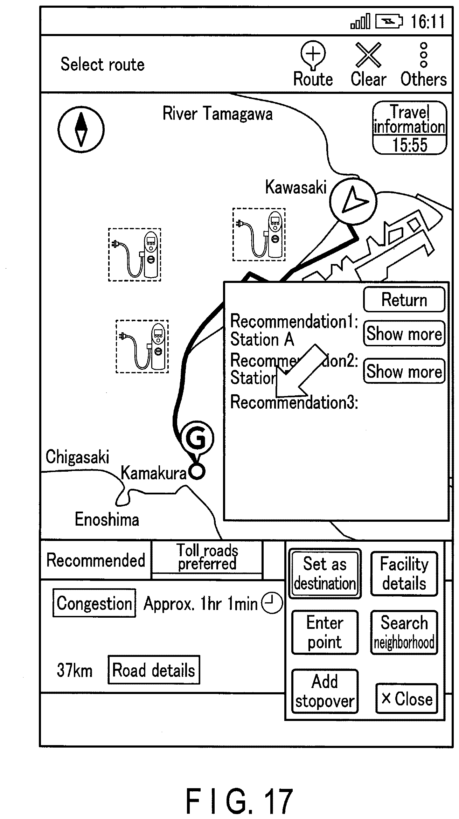

FIG. 17 shows a case where the user selects the third recommended route. In the third recommended route, no charging is carried out at any power station. Thus, in this case, no reservation is made for any power station.

As discussed above, the server 400 presents multiple recommended routes in the recommended order based on the user setting information and the like, makes a temporary reservation of a power station, and finalizes the reservation based on the selected recommended route.

### 1.3 Effects of Present Embodiment

According to the present embodiment, efficiency in making a reservation for charging an electric vehicle can be enhanced. This effect is explained below.

Recently, the prevalence of electric vehicles has rapidly increased. To increase their popularity, user concerns over batteries need to be minimized. Meanwhile, in parallel with improvements in the accuracy of traffic congestion prediction has been improvements of the accuracy of expected time of arrival at the destination in car navigations systems.

According to the present embodiment, the server 400, which is configured to search for a route based on traffic prediction and the like, is further configured to voluntarily make a temporary reservation for a recommended power station on the found route, based on the remaining charge of the battery 110 (remaining battery charge information 437), information of power stations (power station information 535, reservation information 536), and user's preferences (user setting information 436), without waiting for the user's request. If the user accepts the suggestion made by the server 400, the server 400 finalizes the reservation of the power station.

With such a structure, the server 400 suggests a route to the user, where a power station on this route is temporarily reserved for the optimal charging timing so that the vehicle would not run out of battery. As a result, the user's concern about a dead battery can be minimized, and the user's inconvenience of having to search for a power station in consideration of a possible dead battery and making a reservation for the power station can be resolved, while the efficiency in making a reservation of a power station can be improved.

### 2. Second Embodiment

An information processing device, information processing method, and information processing program according to the second embodiment are now explained. The present embodiment relates to the processing executed when it is found that the vehicle will not be able to reach the power station by the reservation time after the reservation of the power station is finalized in the first embodiment. The following explanation will focus only on the points that differ from the first embodiment.

### 2.1 Operations

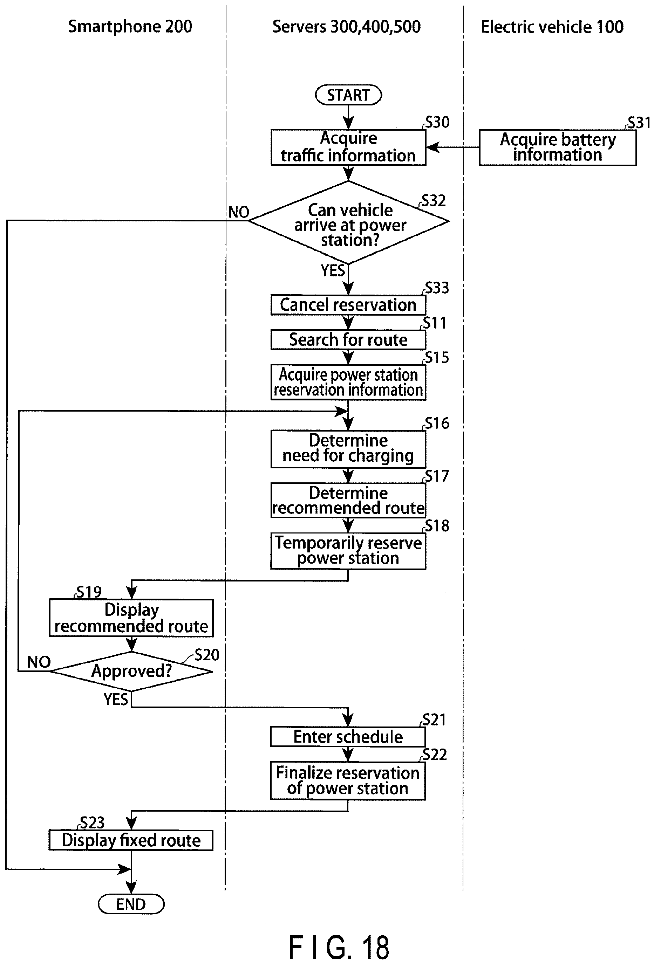

FIG. 18 is a flowchart of the operations of the smartphone 200, server 400 (including the operations of the servers 300 and 500), and electric vehicle 100 for reserving a power station during the driving of the electric vehicle 100. The following processing of the server 400 is realized mainly by the controller 430 when the processor 431 implements the program 435, as explained with reference to FIG. 8.

As illustrated in this drawing, the server 400 acquires the traffic information 335 from the server 300 at regular intervals (step S30). A traffic congestion heavier than expected, or a road closure related to a traffic accident, may be found from the acquired traffic information 335. Then, the server 400 (second determination section 455) immediately acquires the currently remaining battery charge information 437 from the electric vehicle 100 (step S31), and determines whether or not the vehicle can arrive at the power station by the reservation time by taking the current recommended route approved by the user (step S32).

If a late arrival is not determined (no at step S32), the server 400 maintains the finalized reservation (or a reservation that is still a temporary reservation) of the power station as originally made, without making any particular change of the recommended route. In contrast, if it is determined that the vehicle will be late (yes at step S32), the server 400 (reservation section 454) cancels the finalized reservation (or temporary reservation) of the power station (step S33). That is, the server 400 transmits a request for canceling the reservation of the power station to the server 500. In accordance with this request, the server 500 cancels the reservation in the reservation information 536.

Thereafter, the server 400 searches for a new route in the same manner as the first embodiment, based on the traffic information 335 acquired at step S30 (step S11), and temporarily reserves the recommended power station on the acquired route (step S15). The operations at steps S16 to S23 are performed as explained in the first embodiment.

### 2.2 Effects of Present Embodiment

According to the present embodiment, in the case of unexpectedly heavy traffic or an accident, the server 400 determines whether the currently recommended route causes any problem, and if so, cancels the reservation of the power station. Furthermore, the server 400 finds a new route, makes a new temporary reservation for the optimal new power station as needed, and presents it to the user.

Thus, even if an unanticipated situation occurs, the user's concern over a dead battery of the electric vehicle 100 can be mitigated. Furthermore, by computing the optimal route that would not exhaust the battery and making a reservation for a power station, driving stability of the electric vehicle 100 can be improved.

The above processing applies to the situations of being influenced by the weather conditions (windy, rainy, or snowy) and the electric vehicle 100 (the number of passengers and weight of load). That is, these elements can affect the consumption of the battery 110. For this reason, the server 400 may determine whether the currently recommended route would cause any problem by taking into consideration these elements in addition to the traffic condition and accidents.

If the reservation is to be changed, the fifth embodiment should be referred to, where an example is discussed.

### 3. Third Embodiment

An information processing device, information processing method, and information processing program according to the third embodiment are now explained. The present embodiment relates to the first and second embodiments in which the scheduled date of riding the electric vehicle 100 is entered to the server 400 in advance so that the server 400 can voluntarily make a reservation of a power station in accordance with the entry condition, without receiving a request from the user. The following explanation will focus only on the points that differ from the first and second embodiments.

### 3.1 Structure

The structure of the server 400 according to the present embodiment is the same as FIG. 6A discussed in the first embodiment. The RAM 433 may further include, for example, a scheduling program (which may be part of the route finding program 435). When this scheduling program is implemented, the server 400 executes the functions as discussed below.

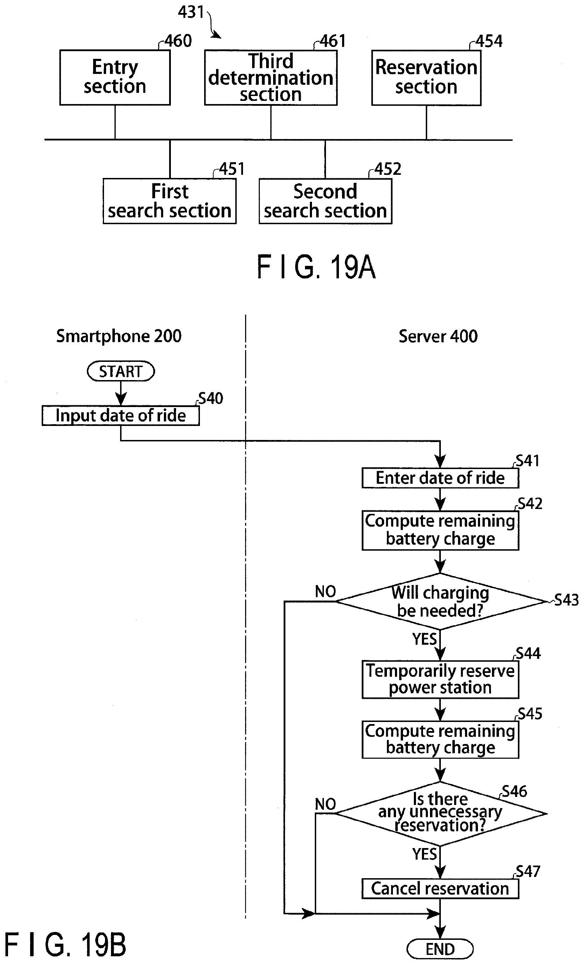

FIG. 19A is a functional block diagram of the processor 431 (or the entire controller 430) when executing the scheduling program. As illustrated in FIG. 19A, the processor 431 executes the scheduling program so as to function as an entry section 460, a third determination section 461, a reservation section 454, a first search section 451, and a second search section 452.

The entry section 460 manages the ride reservations of the electric vehicle 100. That is, the entry section 460 creates a ride schedule database. The created database may be held in the RAM 433. When receiving an input of the first ride reservation from the user, the entry section 460 enters the first information of the first ride reservation, which indicates the first ride scheduled duration, and the second information 437 indicating the remaining charge of the battery 110 at the time of entering the vehicle. The second information 437 is supplied from the electric vehicle 100. The third determination section 461 determines whether or not the battery 110 will need to be charged within the first ride scheduled duration, based on the second information 437. This determination may be made, for example, by computing the consumption of the battery expected during the first ride scheduled duration, and comparing this consumption with the second information 437. When the third determination section 461 determines that the battery 110 will need to be charged, the reservation section 454 temporarily reserves (and may finalize the reservation of) a power station, without waiting for the user's command. The reservation section 454 may refer to the power station information 535 and reservation information 536 when making a temporary reservation of a power station.

When the entry section 460 enters third information (e.g., user setting information 436) regarding the destination of the first ride reservation, the first search section 451 searches for a recommended route to the destination, and the second search section 452 searches for any power station on the way to the destination, as explained with reference to FIG. 6A. When the third determination section 461 determines that the battery 110 will need to be charged when traveling on the recommended route, the reservation section 454 temporarily reserves (and may finalize the reservation of) a power station found by the second search section 452, without waiting for the user's command.

### 3.2 Operations

In the following explanation, two examples, where a destination is entered and where a destination is not entered, will be dealt with.

### <Example 1>

In the first example, a destination is not entered. FIG. 19B is a flowchart of the reservation system according to the present embodiment, showing the first example of the method for entering the date of an upcoming ride and reserving a power station. The following processing of the server 400 is realized mainly by the controller 430 when the processor 431 implements the scheduling program. The user rides the electric vehicle 100 as explained in the first and second embodiments, after the entry is completed according to the present embodiment.

As illustrated in this drawing, the smartphone 200 activates the application of the reservation system explained in the first embodiment. The smartphone 200 receives an input of the time and date of ride from the user (step S40).

The server 400 (entry section 460) creates a ride schedule database in the RAM 433, and enters the time and date of ride into this database (step S41). Here, the server 400 receives the currently remaining battery charge information from the electric vehicle 100 so that the processor 431 can compute the battery consumption during the user's ride that has been entered, and enters the remaining battery charge into the database (step S42). If the processor 431 (third determination section 461) determines that the battery 110 will need to be charged, the processor 431 temporarily reserves a power station (e.g., the power station closest to home) (reservation section 454, step S44). Then, the processor 431 (third determination section 461 and entry section 460) computes the remaining battery charge, assuming that the battery 110 is charged at the power station temporarily reserved at step S44, and enters the result into the database (step S45) .

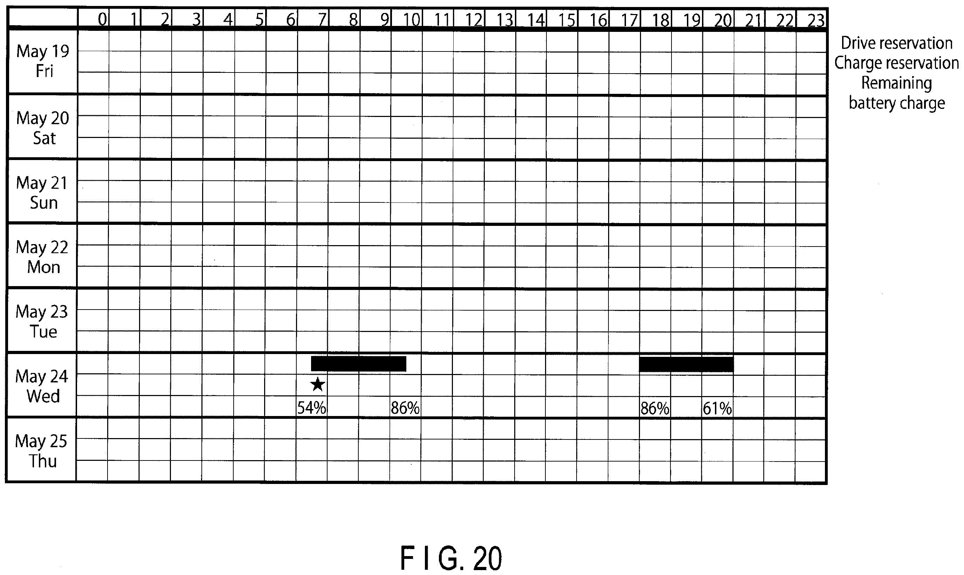

The above situation is indicated in FIG. 20. FIG. 20 is a conceptual diagram of the ride schedule database. By the server 400 transmitting the database information to the smartphone 200, the user is enabled to browse the display on the display section 210 of the smartphone 200 as shown in FIG. 20.

In the example of FIG. 20, the driving is scheduled on Wednesday, May 24 from 7:30 to 10:30, and from 18:00 to 21:00. At 7:30 in the first ride of May 24, the remaining battery charge indicates 54%. The processor 431 may predict the remaining battery charge at the ride end time of 10:30, for the case of charging the battery 110 and for the case of not charging, based on the information such as the remaining battery charge, ride scheduled duration, and average battery consumption. As a result, the processor may determine that the remaining battery charge will fall short of the threshold value set by the user, and may temporarily reserve a power station in the vicinity of the departure place (e.g., home), at 9:00. The reservation of the power station is marked with a star. Assuming that the battery 110 is charged approximately up to 100% at the power station, the processor 431 computes the remaining battery charge for the later times. In the example of FIG. 20, the remaining battery charge at the time of finishing the first ride of May 24 is 86%, and the remaining battery charge at the time of finishing the second ride is still sufficient at 61%. Thus, no further battery charging will be needed for this day.

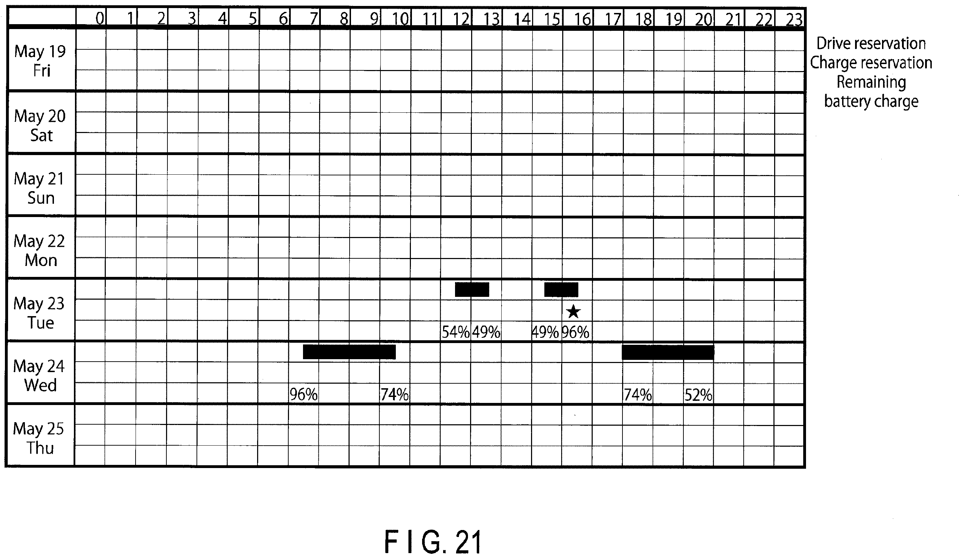

The explanation returns to FIG. 19B. The date of the ride is entered at step S41, and a new power station is temporarily reserved at step S44. In this situation, there may be a temporary reservation that has been made but is no longer needed. If this is the case (yes at step S46), the processor 431 (third determination section 461) notifies the server 500 of the cancellation of this temporary reservation (step S47). This is illustrated in FIG. 21. In a manner similar to FIG. 20, FIG. 21 is a conceptual diagram of the ride schedule database.

As illustrated in this drawing, after the ride schedule for May 24 as shown in FIG. 20 is entered with a power station temporarily reserved, ride schedules are entered for Tuesday, May 23, from 12:30 to 13:30, and from 15:30 to 16:30. In addition, a power station in the user's neighborhood after the second ride of May 23 (e.g., when returning home) is temporarily reserved. Unlike the case of FIG. 20, the remaining battery charge at the first ride start time of May 24 will indicate 96%, which means that the battery 110 will not need to be charged on May 24. The processor 431 therefore cancels the temporary reservation of the power station for May 24.

In the above explanation, the reservations made by the reservation section 454 are temporary reservations. Any of the reservations may be finalized. That is, after automatically making a temporary reservation of a power station, the smartphone 200 may prompt the user to approve the finalization of the reservation. When receiving an approval from the user, the temporary reservation is switched to a finalized reservation. Thus, if the processing of step S47 is executed after switching to a finalized reservation, the reservation to be canceled is a finalized reservation, while if it is before switching to a finalized reservation, the reservation to be canceled is a temporary reservation. The timing of receiving the user's approval for the finalization of the reservation may be before the ride of the electric vehicle 100, or during the ride. The reservation section 454 may make a finalized reservation instead of a temporary reservation at step S44.

### <Example 2>

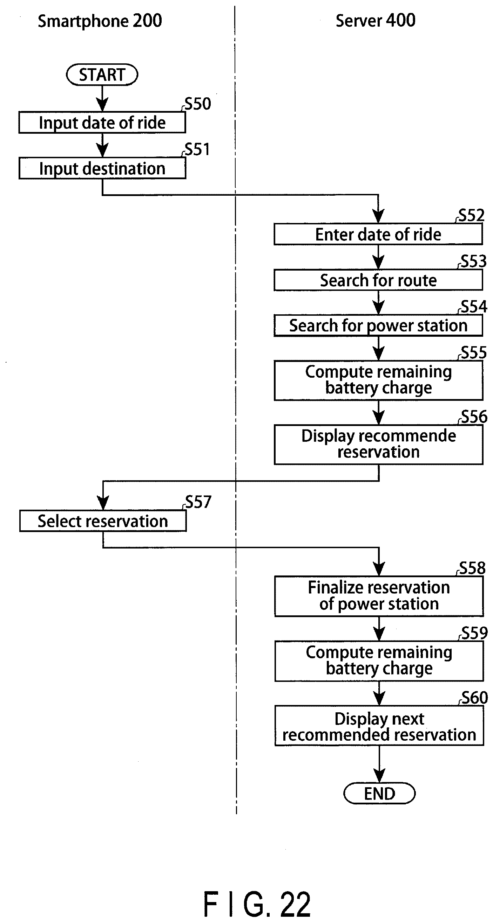

In the second example, the destination is entered together with the time and date of the ride. FIG. 22 is a flowchart of the reservation system, which corresponds to FIG. 19B in the first example.

As illustrated in this drawing, the smartphone 200 activates the application of the reservation system as explained in the first embodiment. The smartphone 200 receives the user's input of the time and date of a ride (step S50). Thereafter, the smartphone 200 receives the user's input of a destination (step S51).

Then, the server 400 (entry section 460) creates a ride schedule database in the RAM 433, and enters the time and date of the ride into this database (step S52). Furthermore, the processor 431 of the server 400 (first search section 451) searches for a route to the destination (step S53), and further searches for power stations on the found route (second search section 452, step S54). The remaining battery charge is computed for the case of charging the battery 110 at these power stations and for the case of not charging (step S55), and a recommended reservation of a power station is entered to the database (step S56). At this timing, the processor 431 may make a temporary reservation or finalized reservation for the recommended power station.

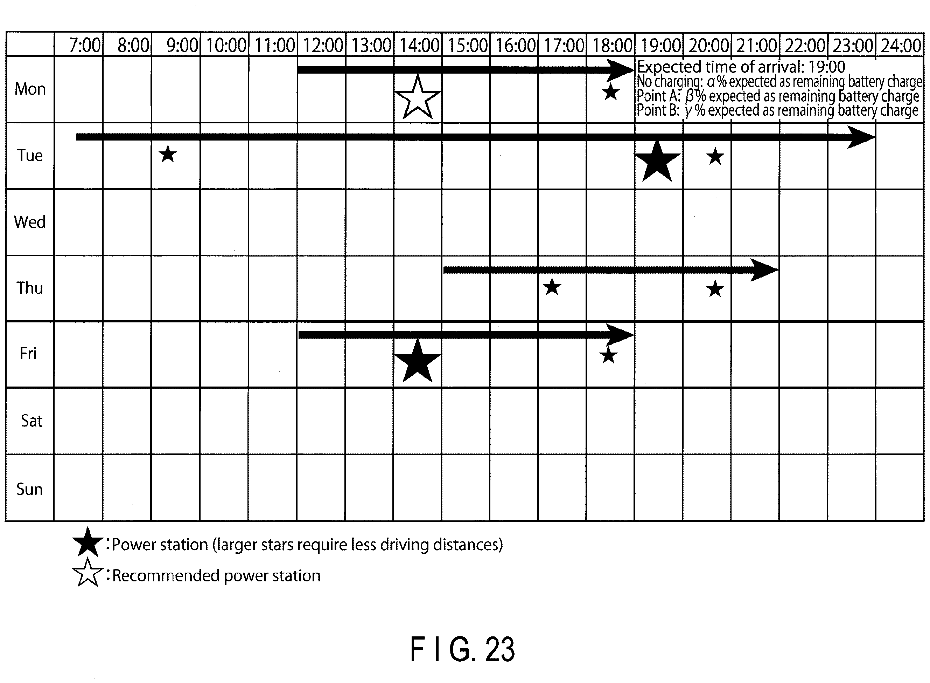

The above process is indicated in FIG. 23. In FIG. 23, a conceptual diagram of a ride schedule database is presented, which corresponds to FIGS. 20 and 21 of the first example. The user can browse the display of FIG. 23 on the display section 210 of the smartphone 200.

In the example of FIG. 23, ride events are entered for the following days of the week:
- Monday: 12:00 to 19:00
- Tuesday: 7:30 to 24:00
- Wednesday: 15:00 to 22:00
- Thursday: 12:00 to 19:00

The processor 431 searches for routes for these four ride events, and power stations in the vicinity of the routes are marked with stars. Bigger stars indicate power stations located closer to the route requiring shorter detours. The white star indicates the power station recommended by the processor 431. In the example of FIG. 23, it is recommended that the power station be reserved on Monday at 14:00. The reservation section 454 may temporarily reserve the recommended power station at this point.

The processor 431 further displays on the database the estimated time of arrival at the destination and estimated remaining battery charge at the time of arrival with regard to the upcoming ride event (i.e., Monday according to FIG. 23). In the example of FIG. 23, the estimated time of arrival for Monday is 19:00, at which the estimated remaining battery charge is α% if no charging of the battery 110 is performed. On the other hand, with the battery charged at point A (the power station recommended at 14:00), the estimated remaining battery charge is β%, and with the battery charged at point B (the power station at a location expected to pass at 18:00), the estimated remaining battery charge is γ%.

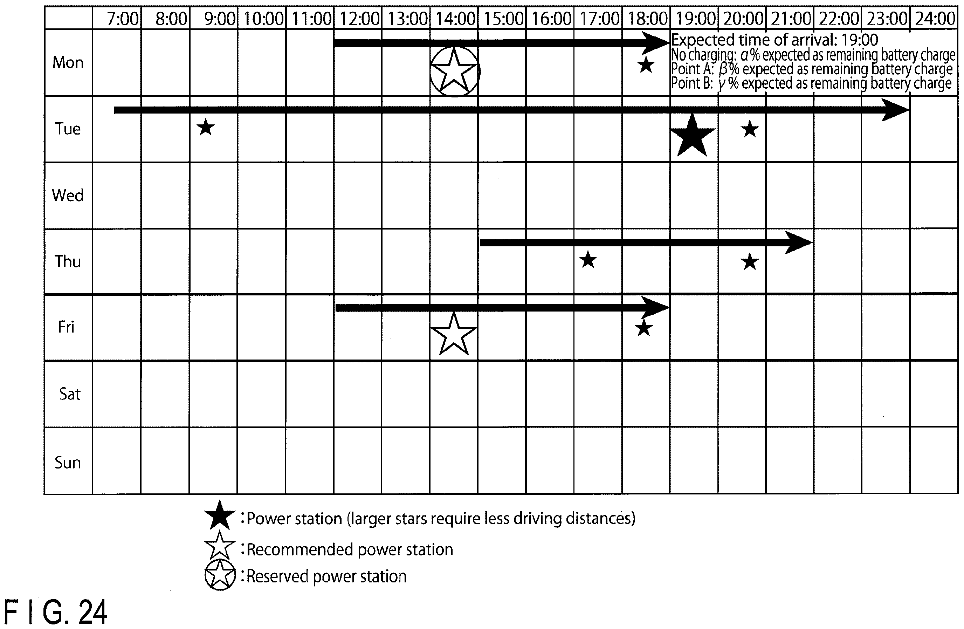

The explanation returns to FIG. 22. When the smartphone 200 receives a selection for a reservation from the user referring to the database of FIG. 23 (step S57), the processor 431 of the server 400 (reservation section 454) finalizes the reservation of the power station selected by the user (step S58). The remaining battery charge is re-computed based on this finalized reservation, as needed (step S59), and the next recommended reservation is displayed on the database (third determination section 461, entry section 460, step S60). This process is illustrated in FIG. 24. In a manner similar to FIG. 23, FIG. 24 is a conceptual diagram of a ride schedule database.

As illustrated in this drawing, after the user selects the recommended reservation of Monday, 14:00, in FIG. 23, the processor 431 sends a request for finalizing the reservation to the server 500. In the example of FIG. 24, a circled white star indicates the power station for which the reservation is finalized. The processor 431 computes the next recommended reservation and enters it to the database. In the example of FIG. 24, a reservation of a power station on Friday at 14:00 is recommended.

In the above explanation, the reservation made by the reservation section 454 at step S58 is a finalized reservation, because the user's approval has been received at step S57. The reservation section 454 may be configured to temporarily reserve the recommended power station at step S56, and switch the temporary reservation to a finalized reservation at step S57 when receiving an approval. Alternatively, the reservation section 454 may be configured to make a temporary reservation at step S58, and switch the temporary reservation to a finalized reservation when receiving an approval from the user. This is because the ride date entry may be made before the actual ride according to the present embodiment. Especially, if the embodiment is applied to a car sharing system or the like, it is expected that a ride date entry may be made several days or weeks before the ride. For such a case, a reservation may be made only temporarily at the time of entry, and an input of finalization from the user can wait until the day of actual ride or several days before the ride. In the same manner as in the first example, the timing of receiving the user's approval of the finalization of the reservation may be before the ride of the electric vehicle 100, or during the journey.

### 3.3 Effects of Present Embodiment

According to the present embodiment, a ride schedule is entered to the database, and the server 400 provides recommended power stations in accordance with the ride schedule. This can mitigate the inconvenience for users in reserving power stations. In addition, the optimal charging timing can be determined based on the ride schedule of several days, and therefore an efficient charging schedule can be set up.

In the above example, the user frequently rides the electric vehicle 100. In the case of the user using the vehicle only on weekends or not riding for a long duration of time, it is preferable that self-discharge of the battery be taken into consideration. That is, if the duration between a ride event and the next ride event exceeds a certain threshold length, the electric vehicle 100 may be started at any timing to re-send the remaining battery charge information to the server 400 so that the operations of steps S56 to S60 may be re-executed.

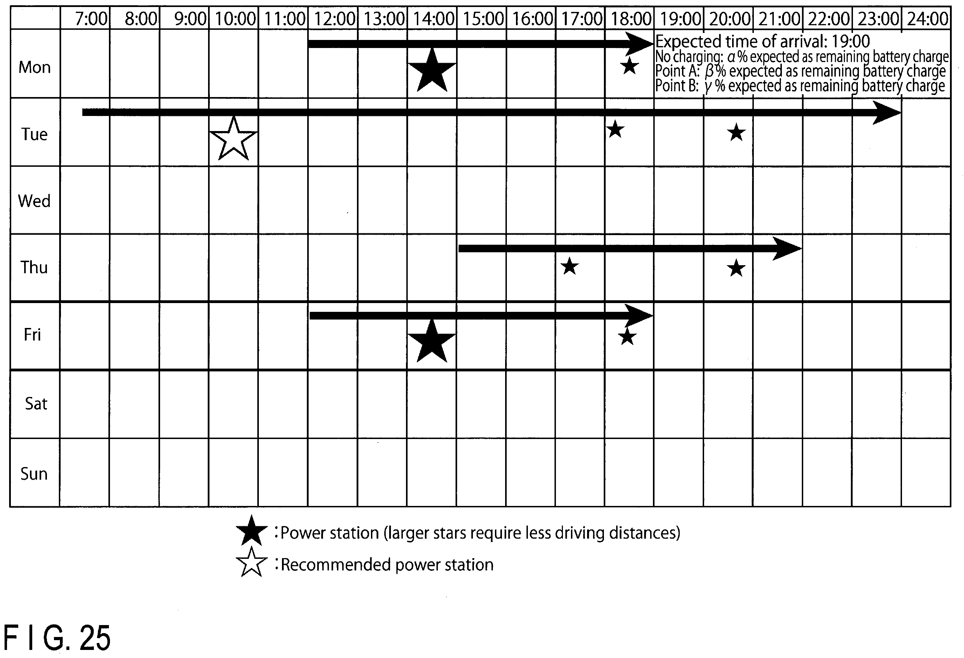

In the examples of FIGS. 23 and 24, the charging on Monday at 14:00 is recommended. The examples of FIGS. 23 and 24, however, include long hours of driving on Tuesday. To maintain the battery charge at a safe level, it may be better to charge on Tuesday instead of Monday. If this is the case, as illustrated in FIG. 25, a power station located on Tuesday's long-distance journey may be recommended instead of Monday's. If the user does not approve the recommendation of FIG. 23, the recommendation of FIG. 25 may be presented. Alternatively, based on priority order information in the user setting information 436, the recommendation of FIG. 25 may be presented instead of the recommendation of FIG. 23.

### 4. Fourth Embodiment

An information processing device, information processing method, and information processing program according to the fourth embodiment are now explained. According to the present embodiment, the server 400 is omitted from the first to third embodiments, and the smartphone 200 is provided with the functions of the server 400. The following explanation will focus only on the points that differ from the first to third embodiments.

### 4.1 Structure

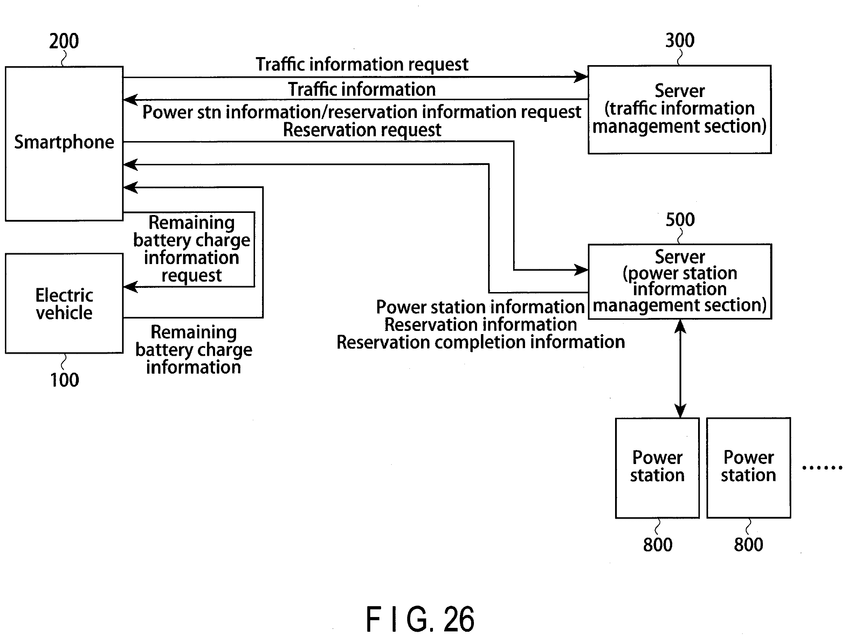

FIG. 26 is a block diagram of the reservation system 1 according to the present embodiment, which corresponds to FIG. 2 discussed in the first embodiment.

As illustrated in the drawing, this example differs from FIG. 2 of the first embodiment in that the operations executed by the server 400 in the first embodiment are executed by the smartphone 200. These operations are:
- Acquiring traffic information from the server 300
- Acquiring power station information, reservation information, and reservation completion information from the server 500
- Reserving a power station
- Acquiring remaining battery charge information from the electric vehicle 100
- Computing recommended route

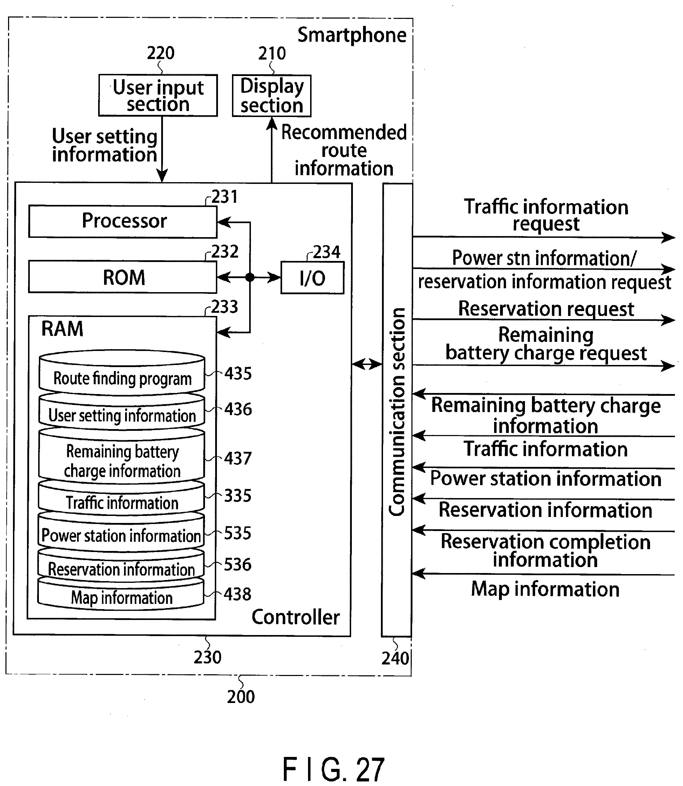

FIG. 27 is a block diagram of the smartphone 200 according to the present embodiment. In the structure of this example, as illustrated in the drawing, the RAM 233 stores various data and the route finding program 435, which are stored in the RAM 433 of the server 400 in FIG. 6A, so that the functions of the server 400 in FIG. 4 of the first embodiment can be realized. This program 435 and map information 438 may be downloaded from the server 300 or 500 onto the smartphone 200 by way of wireless communication line or wired communication line, or may be downloaded from other servers (e.g., the server of the business entity that operates the reservation system as explained in the first embodiment). Naturally, the program 435 may already be stored in the RAM 233 at the time of sale of the smartphone 200 to the user.

With the processor 231 executing the program 435, the processor 231 (or the entire controller 230) functions as the reception section 450, first search section 451, second search section 452, first determination section 453, reservation section 454, and second determination section 455, as explained with reference to FIG. 6B in the first embodiment.

As illustrated in FIG. 27, the smartphone 200 sends a request for the information of the remaining charge of the battery 110 to the electric vehicle 100, a request for traffic information to the server 300, and a request for power station information and reservation information to the server 500. Then, the smartphone 200 receives the remaining battery charge information from the electric vehicle 100, the traffic information from the server 300, and the power station information, reservation information and reservation completion information from the server 500, and stores all the information in the RAM 233.

### 4.2 Operations

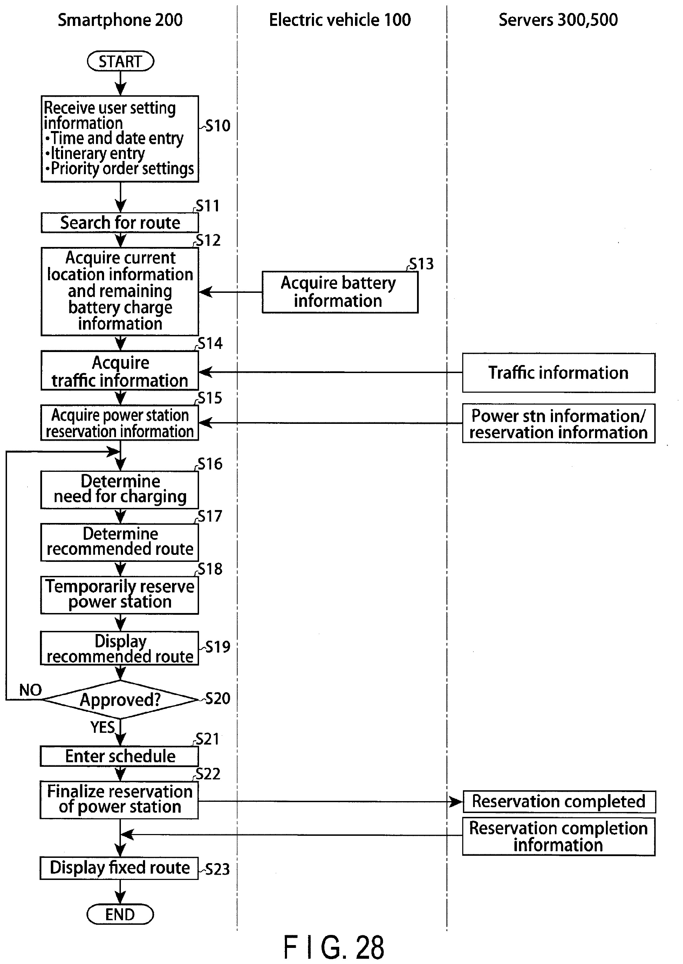

FIG. 28 is a flowchart of the operations of the reservation system for electric vehicle power stations according to the present embodiment, which corresponds to FIG. 8 of the first embodiment.

As illustrated in this drawing, the present embodiment differs from FIG. 8 of the first embodiment in that all of steps S10 to S13 and S14 to S23 are executed by the smartphone 200. Naturally, various determinations, computations and command issuance at these steps are mainly performed by the processor 231 of the smartphone 200. The determination of FIG. 9 is performed in the same manner.

The operations explained in the second and third embodiments are executed in the same manner. The operations executed by the server 400 in FIGS. 18, 19B, and 22 are executed by the smartphone 200, although its illustration is omitted.

### 4.3 Effects of Present Embodiment

According to the present embodiment, the server 400 is not required so that the cost of the reservation system 1 can be reduced. Furthermore, the user does not need to access the server each time of processing, but the processing can be completed on the user's smartphone 200. Thus, the communication amount of the smartphone 200 can be reduced, and the usability of the reservation system 1 can be enhanced.

In the example of the present embodiment, the processing of the first embodiment is mainly executed by the smartphone 200. The same applies to the processing of the second embodiment. That is, the smartphone 200 downloads the scheduling program explained in the second embodiment from a server. When the processor 231 of the smartphone 200 implements the scheduling program, the processor 231 (or the entire controller 230) functions as illustrated in FIG. 19A of the second embodiment. In this case, the operations of steps S40 to S47 in FIG. 19B are executed by the smartphone 200, and the operations of reserving and canceling power stations are executed from the smartphone 200 directly on the server 500.

### 5. Fifth Embodiment

An information processing device, information processing method, and information processing program according to the fifth embodiment are now explained. According to the present embodiment, the structures of the first to third embodiments further include a car navigation system so that the car navigation system is provided with part of the function of the display section 210 of the smartphone 200. The following explanation will focus only on the points that differ from the first to third embodiments.

### 5.1 Structure

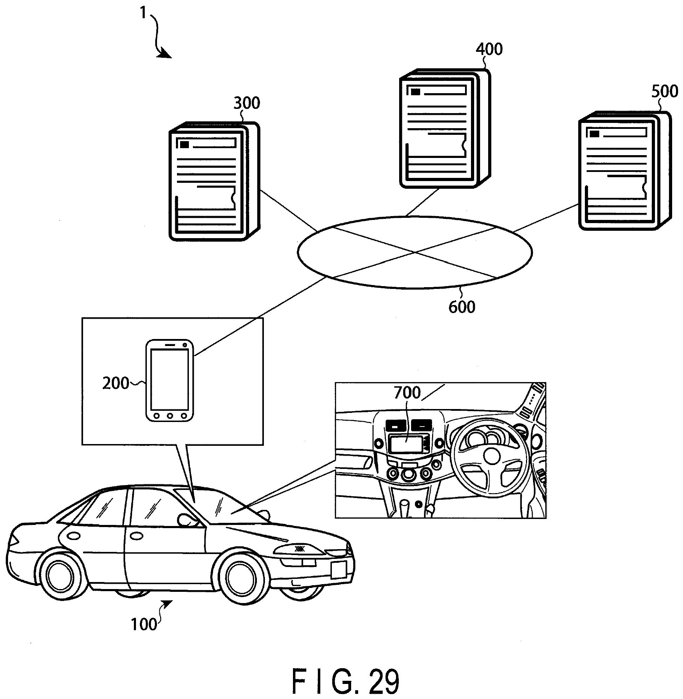

FIG. 29 shows an exemplary structure of the reservation system 1 according to the present embodiment. As illustrated in this drawing, the reservation system 1 of this example is, in addition to the structure of FIG. 1 as explained in the first embodiment, further provided with a car navigation system 700 in the electric vehicle 100.

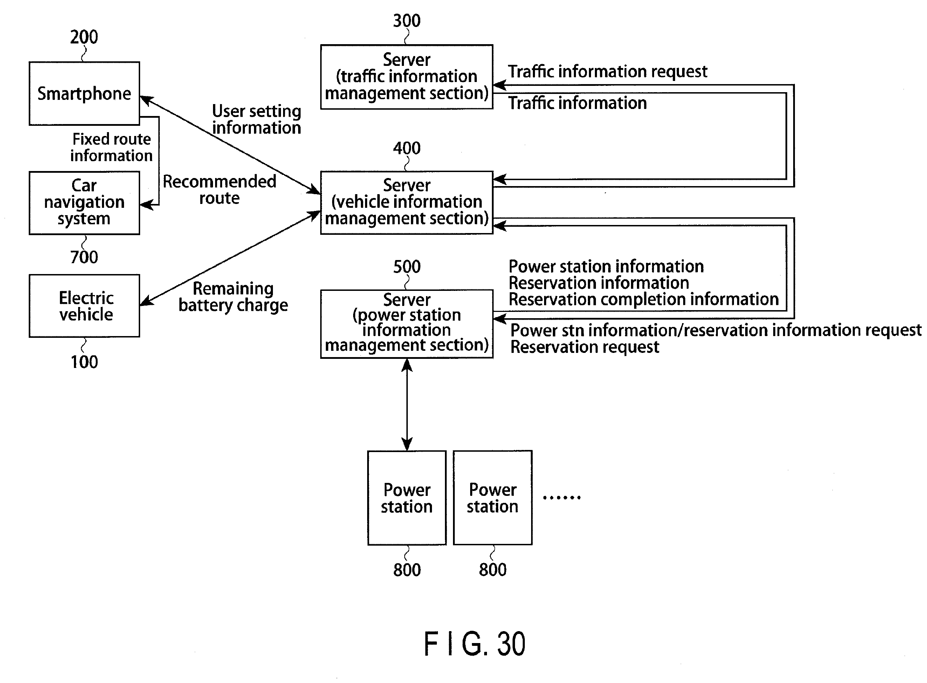

FIG. 30 is a block diagram of the reservation system 1 in FIG. 29. As illustrated in this drawing, in the reservation system 1 of this example, the smartphone 200 as in FIG. 2 of the first embodiment sends fixed route information to the car navigation system 700 so that the car navigation system 700 can display the fixed route information thereon.

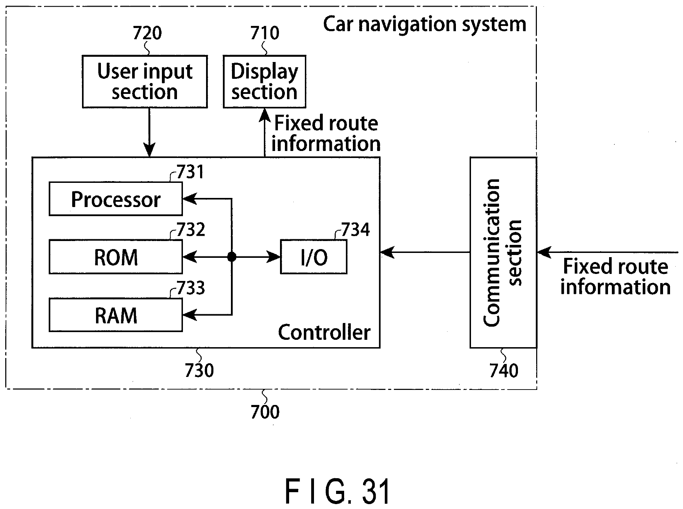

FIG. 31 is a block diagram showing an exemplary structure of the car navigation system 700. As illustrated in this drawing, the car navigation system 700 includes a display section 710, user input section 720, controller 730, and communication section 740.

The display section 710, which may be a liquid crystal display, presents to the user various types of information such as route navigation.

The user input section 720 receives inputs of commands from the user in relation to various functions of the car navigation system. For example, the display section 710 may be a touch-panel display device, and the display section 710 and user input section 720 may be formed as one body.

The communication section 740 transmits and receives information to and from the smartphone 200 by wireless communication. The communication section 740 may receive fixed route information from the smartphone 200.

The controller 730 controls the entire processing of the car navigation system 700. The controller 730 includes a processor 731 such as a CPU, a ROM 732, a RAM 733, and an input/output circuit 734. The ROM 732 stores programs to be implemented by the processor 731, and necessary data. The RAM 733 serves as a work area of the processor 731. The input/output circuit 734 controls information transmission/reception to and from the communication section 740. The processor 731 may implement the program stored in the ROM 732, and thereby performs route navigation. That is, the processor 731 displays a fixed route on the display section 710 based on the fixed route information received by the communication section 740, and further performs route navigation by locating the electric vehicle 100 based on the GPS information that is not shown.

### 5.2 Operations

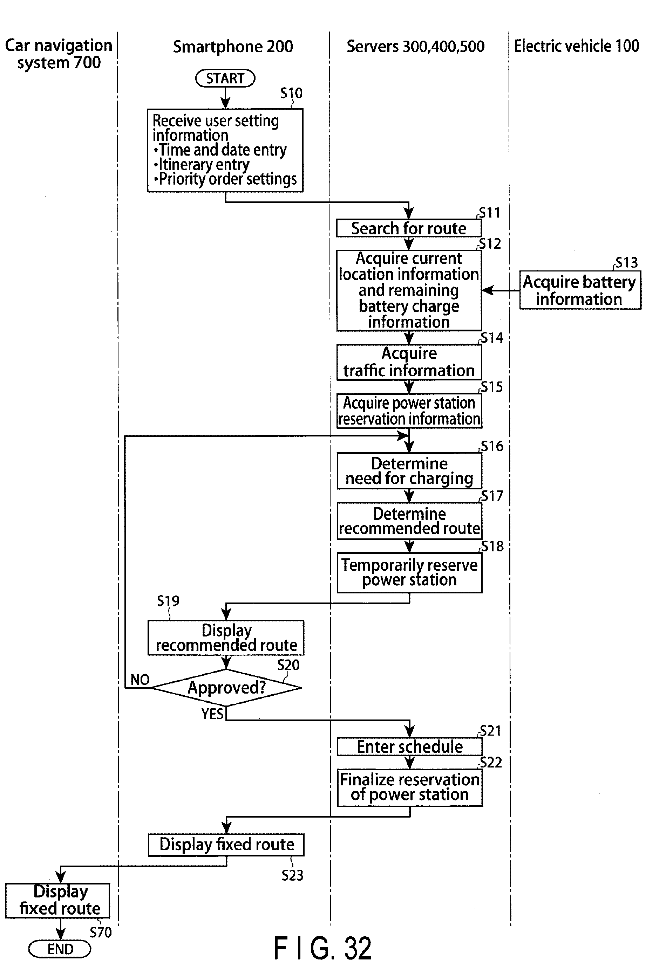

Next, the operation of the reservation system 1 of an electric vehicle power station according to the present embodiment is explained. FIG. 32 is a flowchart of the operations of the smartphone 200, server 400 (including the operations of the servers 300 and 500), car navigation system 700, and electric vehicle 100 for reserving a power station after the user enters the electric vehicle 100, or when the ride of the electric vehicle 100 is determined (the actual ride may be, for example, on a later day). This structure corresponds to FIG. 8 of the first embodiment.

As illustrated in the drawing, the operation of the reservation system 1 according to the present embodiment differs from FIG. 8 of the first embodiment only in that the fixed route is displayed on the display section 710 of the car navigation system 700. The fixed route may be displayed on the display section 710 of the car navigation system 700 and not on the display section 210 of the smartphone 200, or may be displayed on both display sections. Even when the fixed route is displayed on both the car navigation system 700 and the smartphone 200, the content displayed may differ. For example, the smartphone 200 may display a wide-range map covering the departure place to the destination as well as one or more recommended power stations, while the car navigation system 700 may display a small-range map of the current journey area in a three-dimensional manner to suit the primary purpose of navigating a driver.

In general, the display section 710 of the car navigation system 700 has a larger display area than the display section 210 of the smartphone 200. For this reason, part of the function of the smartphone 200, such as displaying power station-related information, prompting the user to input information, and receiving part of inputs from the user may be realized by the car navigation system 700 instead. When displaying information, necessary data may be received from the smartphone 200 or server 400. When receiving inputs from the user, the received contents may be transmitted to the smartphone 200 or server 400.

Next, two exemplary cases are presented, in which the display screen changes at the time of operations.

### <Example 1>

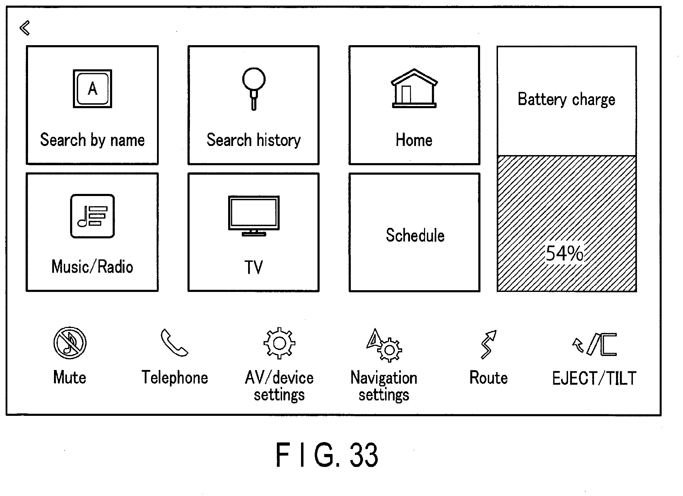

The first example is explained, with reference to FIGS. 33 to 40. In FIGS. 33 to 40, schematic diagrams of the display screen of the display section 710 of the car navigation system 700 are presented. In this example, the majority of the operations of displaying information and receiving inputs from the user are performed by the car navigation system 700, based on the data from the smartphone 200 or server 400. In other words, the user input section 720 of the car navigation system 700 as explained with reference to FIG. 31 includes at least part of the function of the user input section 220 of the smartphone 200 as explained with reference to FIG. 4.

FIG. 33 shows a display screen of the display section 710 of the car navigation system 700 displayed before the start of the navigation. In the same manner as FIG. 10 in the first embodiment, the remaining charge level of the battery 110 is displayed (54% in FIG. 33). This example differs from the first embodiment in an icon "Schedule" displayed on the display section 710. When this "Schedule" icon is selected, the route navigation is initiated, and the reservation system 1 as explained in the first to third embodiments is implemented.

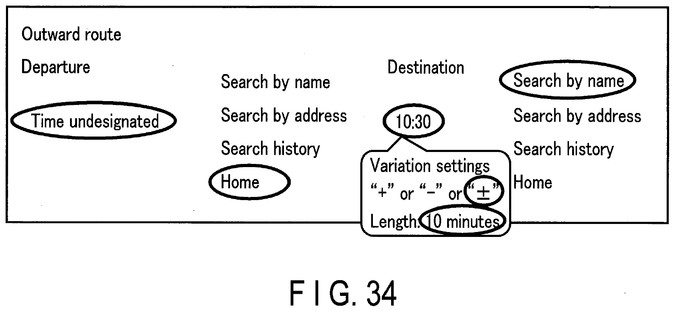

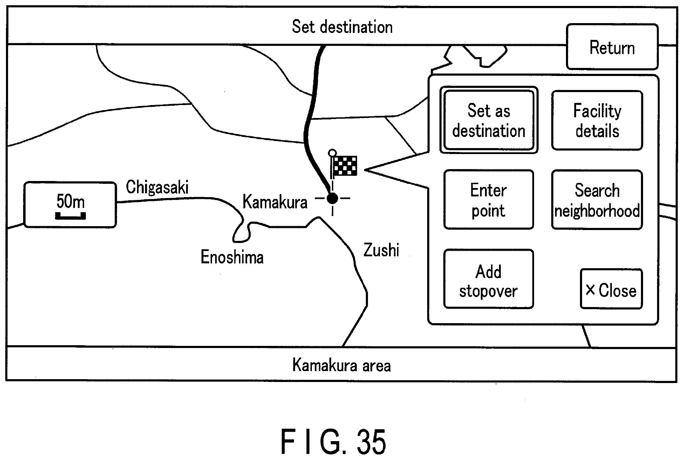

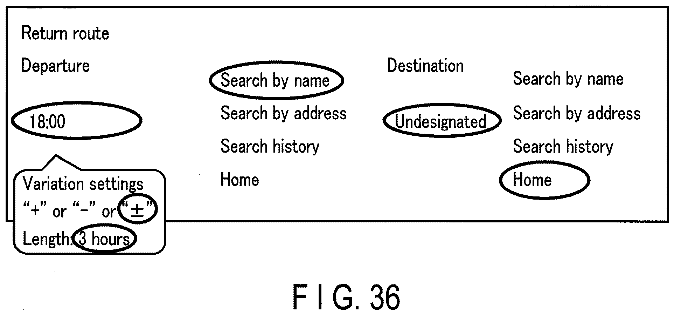

FIG. 34 shows a display screen when the selection of the "Schedule" icon in FIG. 33 is received from the user. As illustrated in this drawing, in the same manner as FIG. 12 of the first embodiment, the screen changes to a screen for receiving user setting information. That is, the car navigation system 700 executes the operation at step S10 in FIG. 32. Thereafter, as illustrated in FIG. 35, the car navigation system 700 receives an input of a destination from the user. In this example, the destination is "Kamakura". Then, as illustrated in FIG. 36, the car navigation system 700 receives an input of return route setting information. The information received in FIGS. 34 to 36 may be transmitted to the server 400 via the smartphone 200 or directly to the server 400.

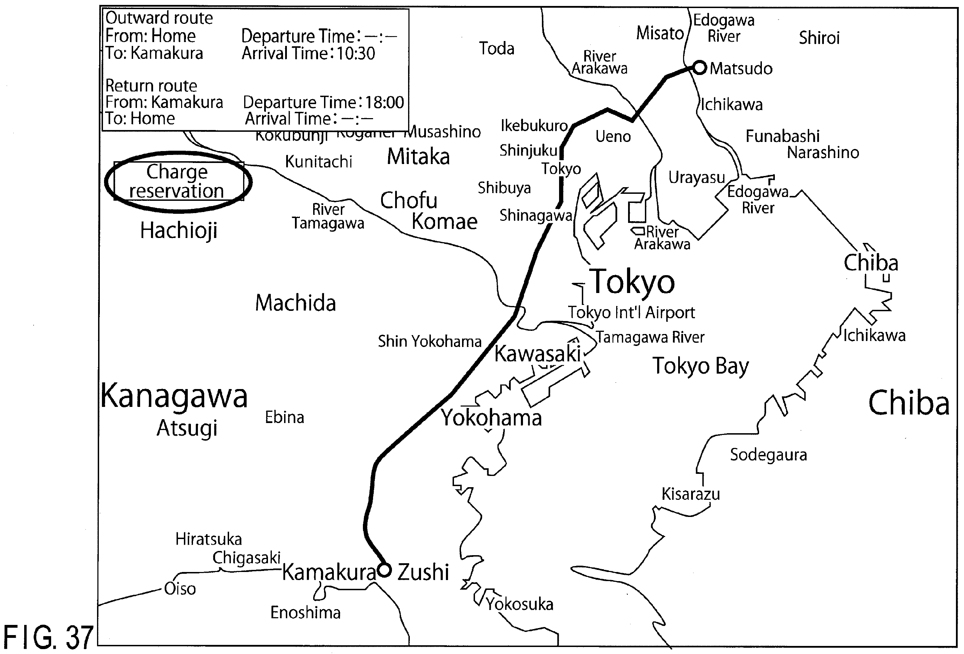

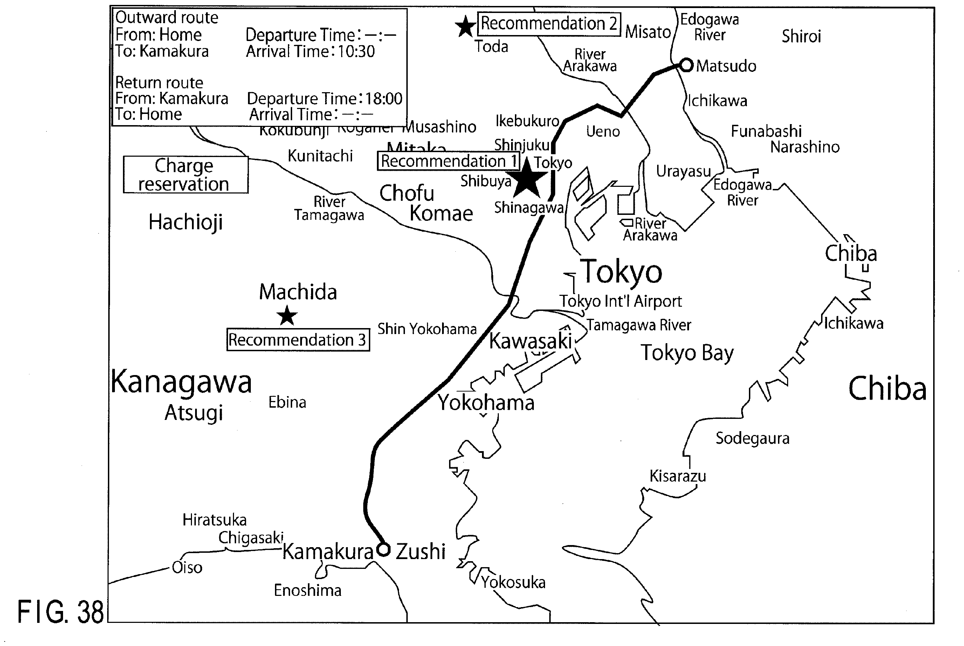

In response, the server 400 searches for a route (steps S11 to S17 in FIG. 32), and the result may be transmitted to the car navigation system 700 via the smartphone 200. As illustrated in FIG. 37, the display section 710 of the car navigation system 700 may display the received route on the map. FIG. 37 shows an exemplary case of:
- Outward route
   - Departure = Matsudo (home), Departure time = undetermined
   - Destination = Kamakura, Arrival time = 10:30
- Return route
   - Departure = Kamakura, Departure time = 18:00
   - Destination = Matsudo (home), Arrival time = undetermined
The sign "Charge reservation" is highlighted, and the server 400 temporarily reserves any of the power stations on the recommended route (step S18 in FIG. 32). The result is shown in FIG. 38.

As illustrated in this drawing, the server 400 marks multiple power stations located in the vicinity of the recommended route, for example with stars. In the example of FIG. 38, larger stars indicate higher levels of recommendation. In FIG. 38, the first recommendation is in the area of Shinagawa in the center of Tokyo, the second recommendation is in the area of Toda in Saitama, and the third recommendation is in the area of Machida in Tokyo. At this point, the server 400 temporarily reserves the first recommended power station (step S18).

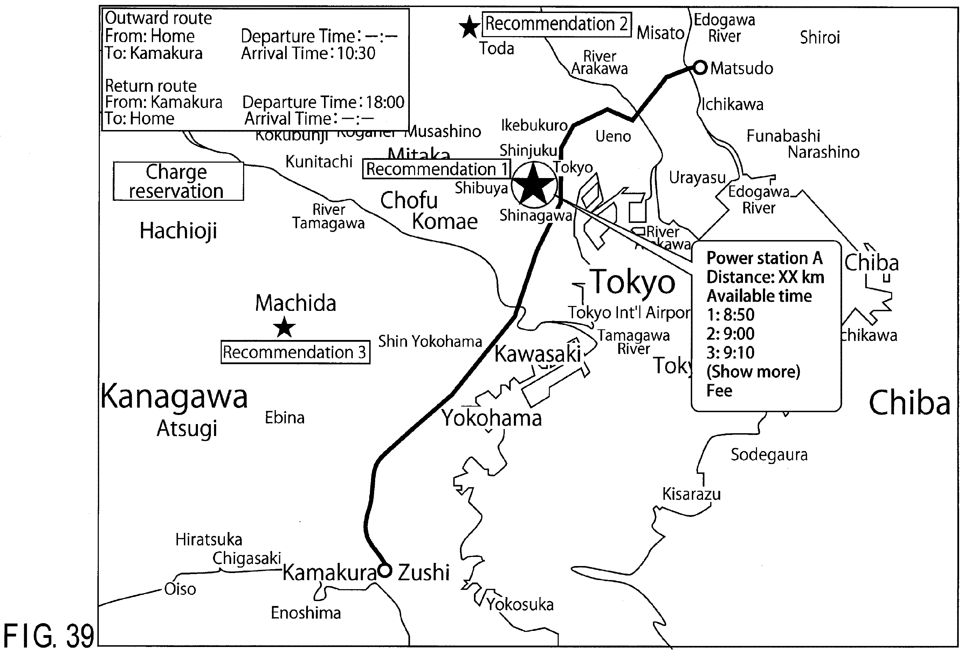

Next, the user selects the first recommended power station (the user may touch the display area of the first recommended power station when the display section 710 that is a touch panel displays a screen as shown in FIG. 38). In response, as illustrated in FIG. 39, the display section 710 of the car navigation system 700 displays detailed information of the first recommended power station (Station A). This display operation may be realized by receiving the power station information 535 and reservation information 536 from the server 400 or 500. Currently, the server 400 has made a temporary reservation for 8:50. Other available time slots are displayed. In accordance with the user's selection, the server 400 finalizes the reservation of the first recommended power station (step S22 in FIG. 32).

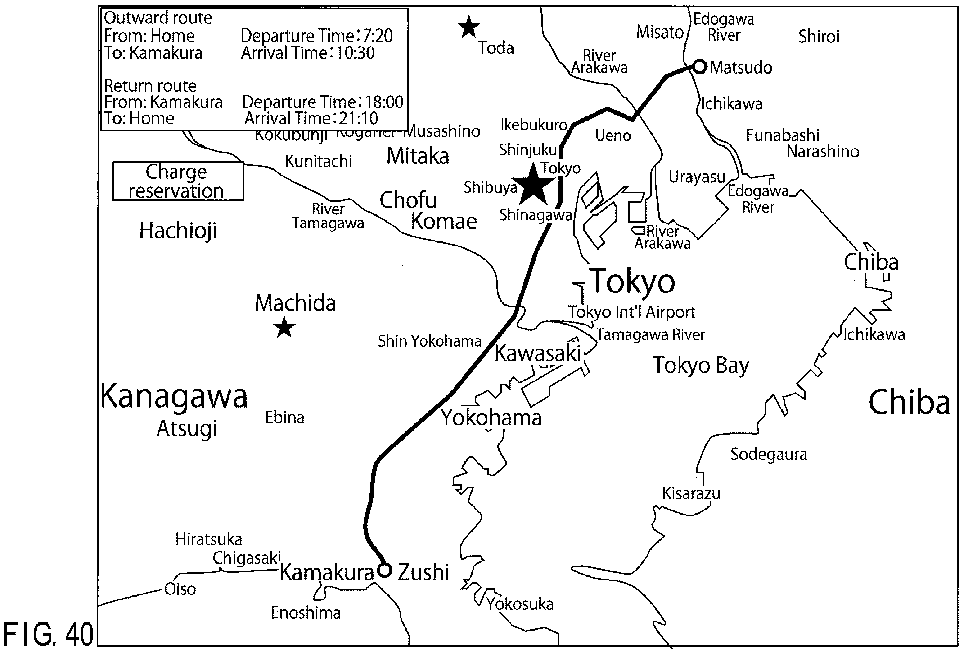

Thereafter, FIG. 40 shows the final screen. As illustrated in this drawing, upon the completion of the reservation of the power station, the server 400 computes, so as to be on time for the reservation of this power station, the departure time (7:20 in the example of FIG. 40) of the outward route from the departure place (home) and the arrival time (21:10 in the example of FIG. 40) of the return route to the destination (home) based on the expected traffic condition and the like. The server 400 displays the result as a fixed route on the display section 710 of the car navigation system 700 (step S70 in FIG. 32). The car navigation system 700 starts the route navigation in accordance with the fixed route.

### <Example 2>

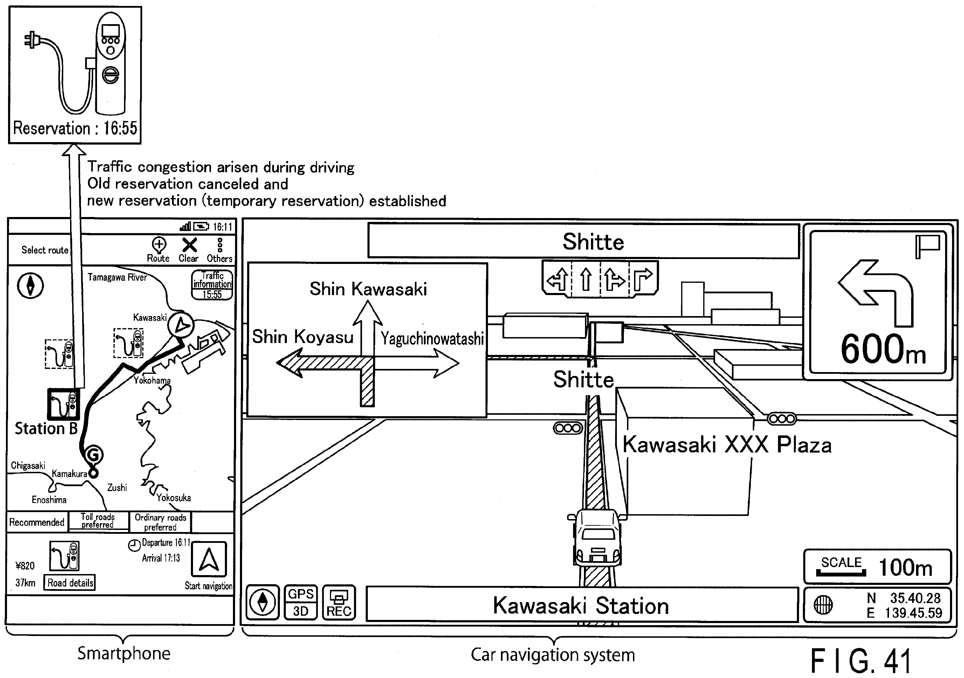

Next, the second example is explained with reference to FIGS. 41 to 50. As explained in the second embodiment, the second example relates to the operations when it is expected that the arrival at the original temporarily-reserved power station will not be on time for the reservation, and when the user rejects the recommended power station. Thus, the second example will be explained with reference to FIG. 18 in addition to FIGS. 41 to 50. FIGS. 41 to 50 show a vertically oriented display on the left, which schematically illustrates the display screen of the display section 210 of the smartphone 200, and a horizontally oriented display on the right, which schematically illustrates the display screen of the display section 710 of the car navigation system 700.

In this example, the display section 210 of the smartphone 200 displays power station-related information, together with the entire recommended route. On the other hand, the display section 710 of the car navigation system 700 mainly provides navigation along the route of the current journey, and receives an input of a selected reservation of a power station from the user.

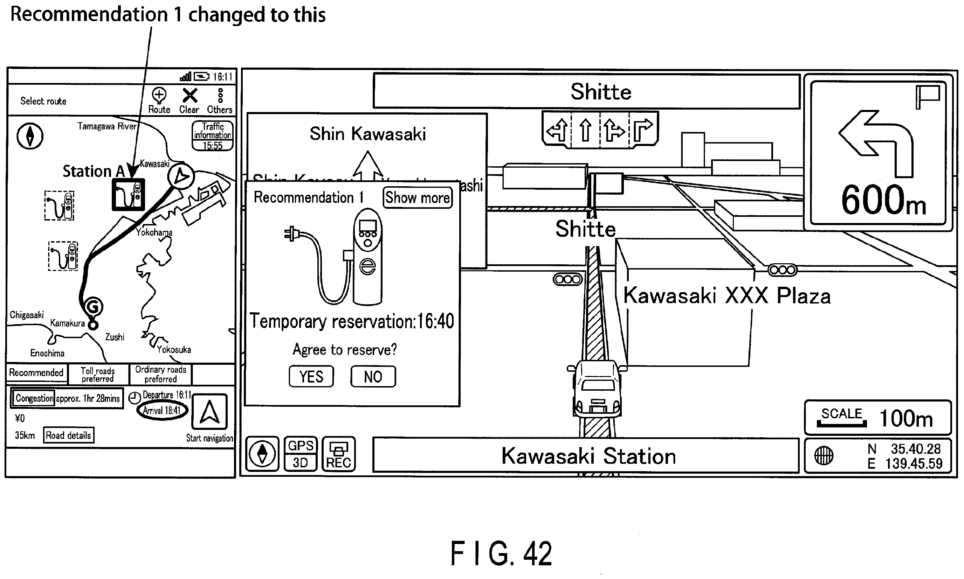

FIG. 41 shows the current journey in the area of Kawasaki heading to Kamakura as a destination. At this moment, a power station (Station B) that is closer to Kamakura than Kawasaki is reserved for 16:55. According to the traffic information 335 received from the server 300, however, congestion has occurred between the current location and Station B, and the server 400 determines that the user (electric vehicle 100) would not arrive at Station B by 16:55 (yes at step S32 in FIG. 18). Then, the server 400 sends a command to cancel the reservation of Station B to the server 500 (step S33 in FIG. 18). Then, the server 400 re-searches for the optimal power station by taking the congestion into consideration (steps S11 to S17 in FIG. 18). The exemplary display of the result is shown in FIG. 42.

As illustrated in this drawing, the server 400 suggests a power station (Station A) in the vicinity of Kawasaki as the first recommendation, and makes a temporary reservation for Station A at 16:40 (step S18 in FIG. 18). This information is also displayed on the display section 710 of the car navigation system 700, and the display section 710 displays a screen for prompting the user to input whether or not the reservation should be finalized.

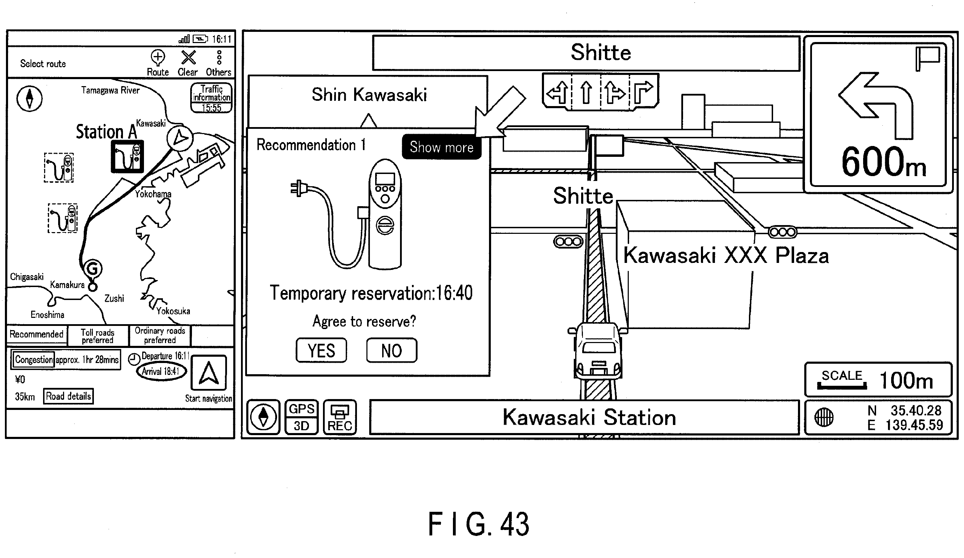

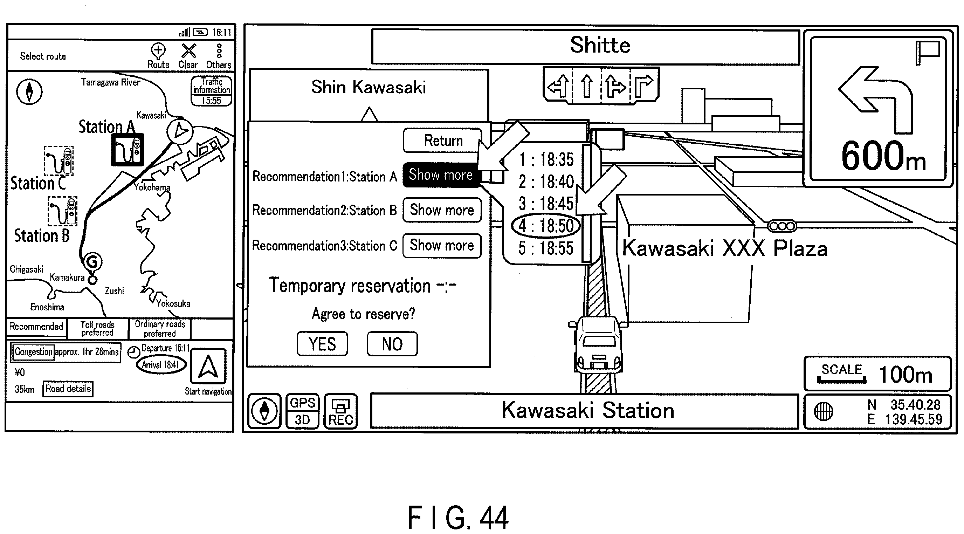

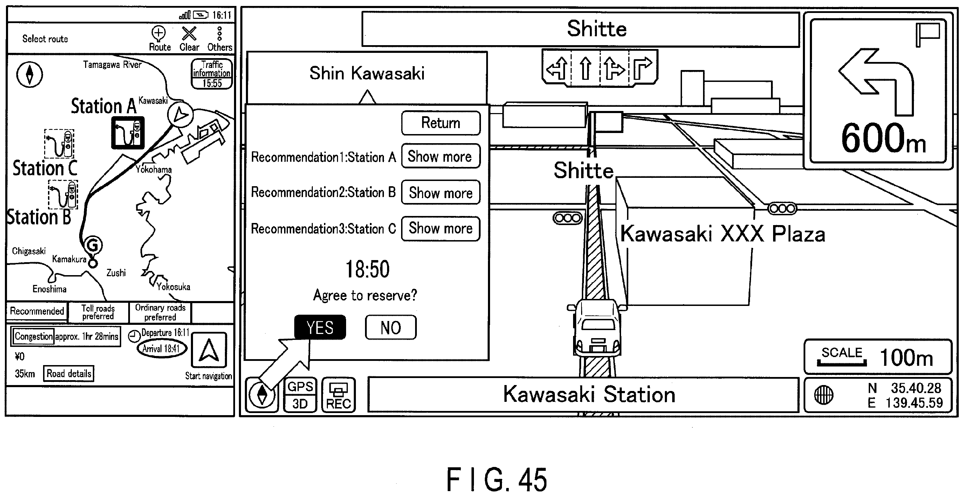

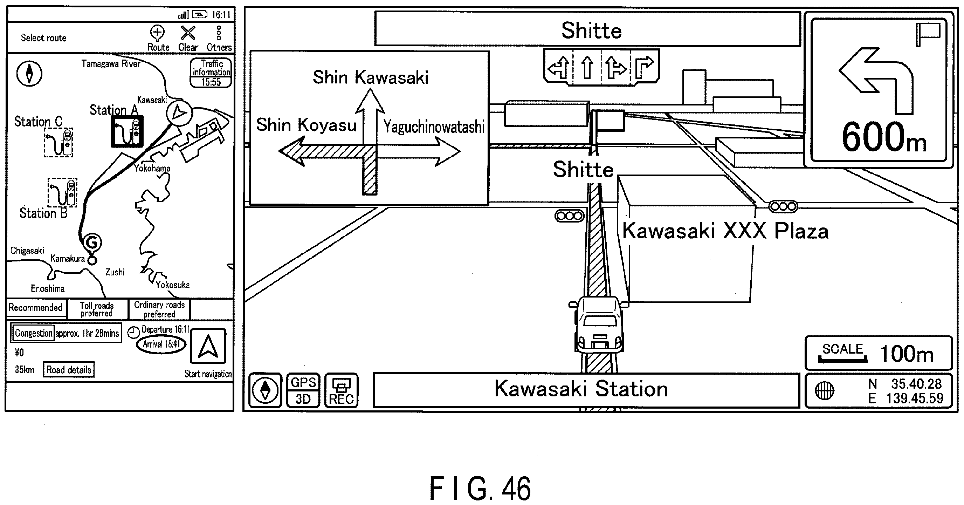

If the user does not wish to use the above temporary reservation, the user may select the icon "Show more" displayed on the display section 710 as illustrated in FIG. 43. In response, the display screen of the display section 710 changes to the one in FIG. 44, displaying the details of different power stations. That is, the server 400 transmits information regarding multiple recommended routes to the car navigation system 700 via the smartphone 200, and the car navigation system 700 displays information of a recommended power station on the display section 710 based on the received information. In the example of FIG. 44, Station A, Station B, and Station C are displayed on the display section 710 as the first to third recommendations. Furthermore, in accordance with the user's request, the display section 710 displays available time slots for the first recommended Station A. This information can be obtained from the power station information 535 and reservation information 536 transmitted from the server 400. If the user selects the time slot of 18:50 for Station A, the display screen of the display section 710 is switched to the one in FIG. 45. On this screen, if the user selects the icon "YES" (yes at step S20 in FIG. 18), this information is transmitted from the car navigation system 700 to the server 400 via the smartphone 200. The server 400 therefore sends a command to the server 500 to finalize the reservation for Station A at 18:50 (step S22 in FIG. 18). FIG. 46 shows a navigation screen thereafter. In the display section 210 of the smartphone 200, Station A, the reservation for which has been finalized, is emphasized.

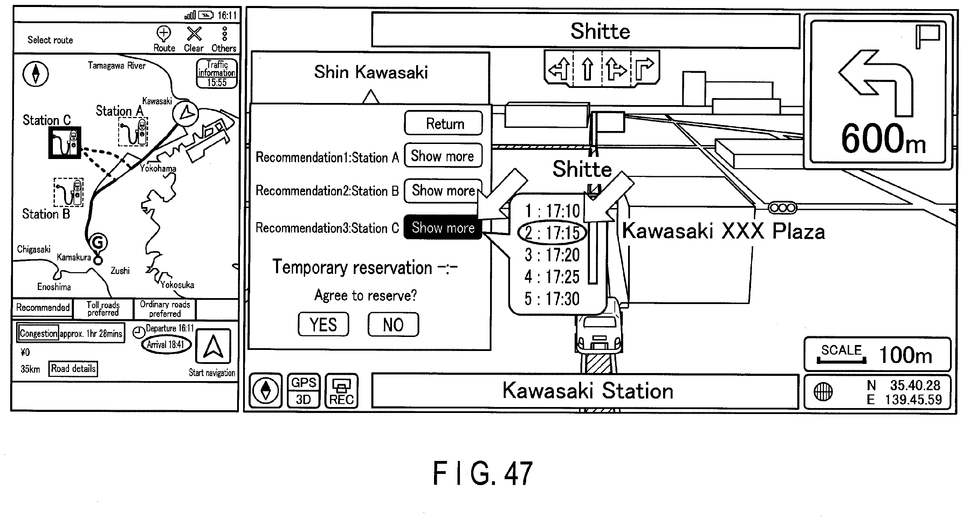

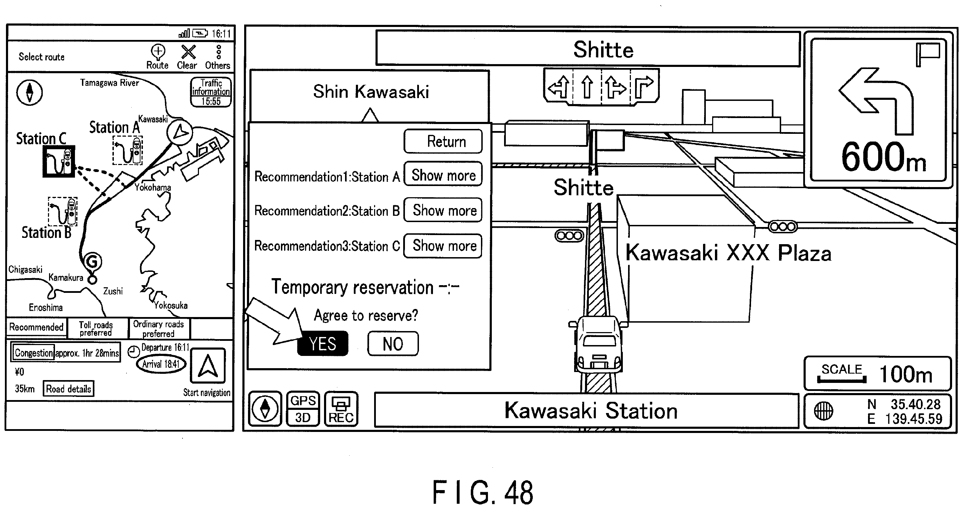

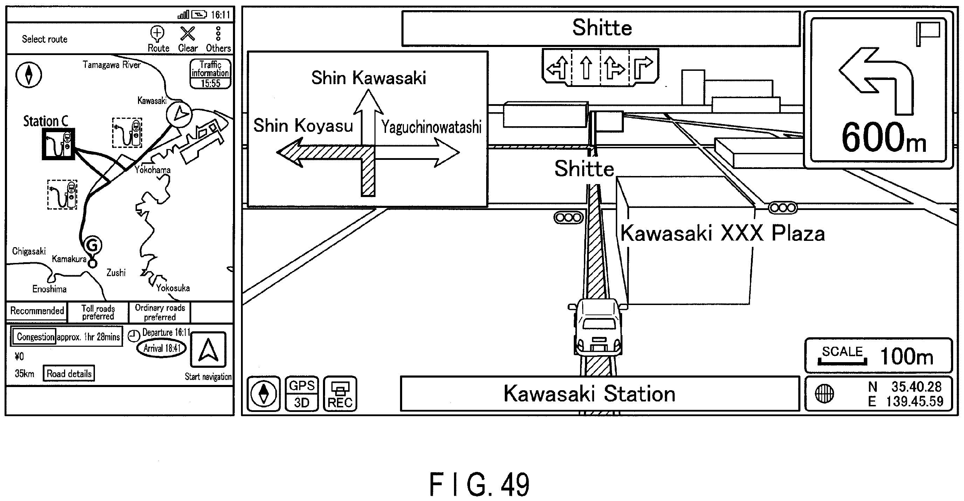

FIG. 47 shows the screen of FIG. 44, on which the user has selected Station C. Since Station C is located away from the current recommended route, the route that will be changed to pass Station C is displayed by dashed lines, as indicated on the display section 210 of the smartphone 200 in FIG. 47. This route is acquired from the operation at step S11 of FIG. 18. When the reservation of Station C is finalized in FIG. 48, the display section 210 of the smartphone 200 is changed to the display of FIG. 49, where the route going through Station C is emphasized. Thereafter, the car navigation system 700 conducts the navigation following this route.

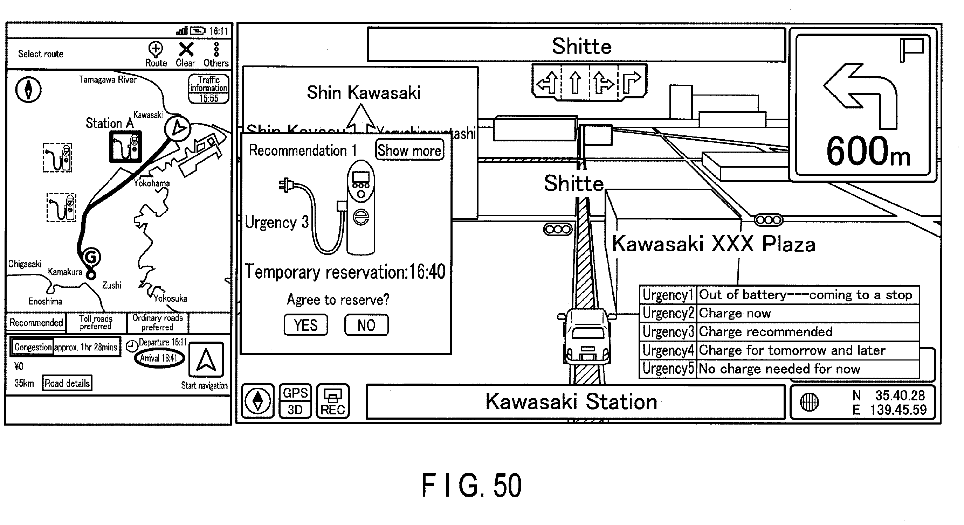

FIG. 50 shows a display screen for a case in which it is found during traveling that the remaining charge of the battery 110 has fallen below a predetermined value. As described above, the server 400 or smartphone 200 monitors the remaining charge of the battery 110 in regular intervals or in real time (step S91 in FIG. 18). As a result of this, if the remaining battery charge decreases, the server 400 displays a screen recommending a temporary reservation of the power station on the display section 710 of the car navigation system 700, in accordance with the degree of urgency. In the example of FIG. 50, the "degree of urgency" is displayed together with the suggestion of a temporary reservation of Station A instead of Station B. Urgency 1 indicates the highest urgency, at which the electric vehicle 100 is about to fall into an inoperable condition. Urgency 5 indicates the lowest urgency, at which charging is not needed for the moment.

### 5.3 Effects of Present Embodiment

According to the present embodiment, the car navigation system 700 implements part of the function of the smartphone 200.

### 6. Sixth Embodiment

An information processing device, information processing method, and information processing program according to the sixth embodiment are now explained. The present embodiment relates to the car navigation system 700 of the fifth embodiment implementing the functions of the smartphone 200. The following explanation will use two examples and focus only on the points that differ from the first to fifth embodiments.

### 6.1 Example 1

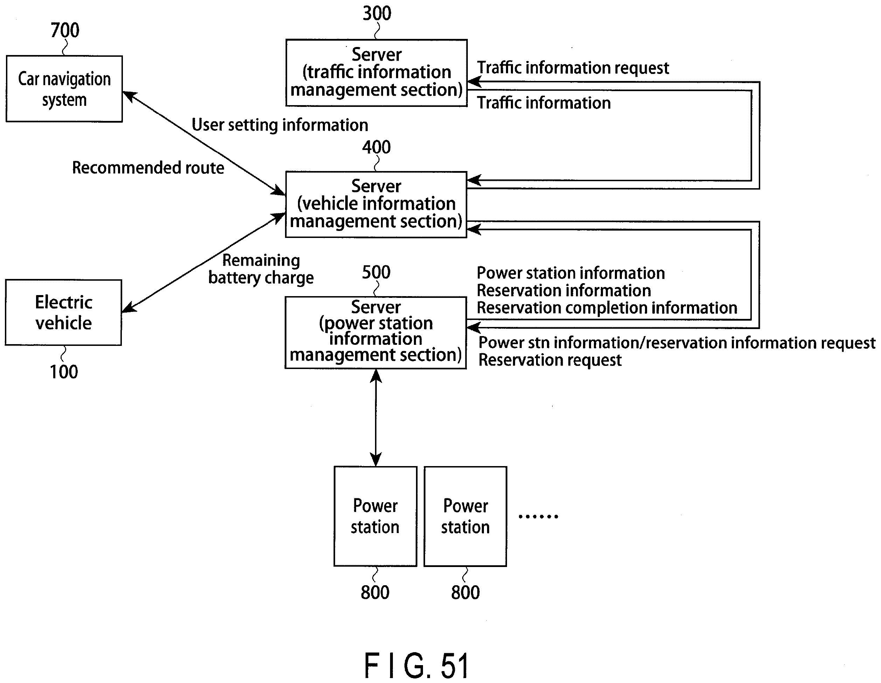

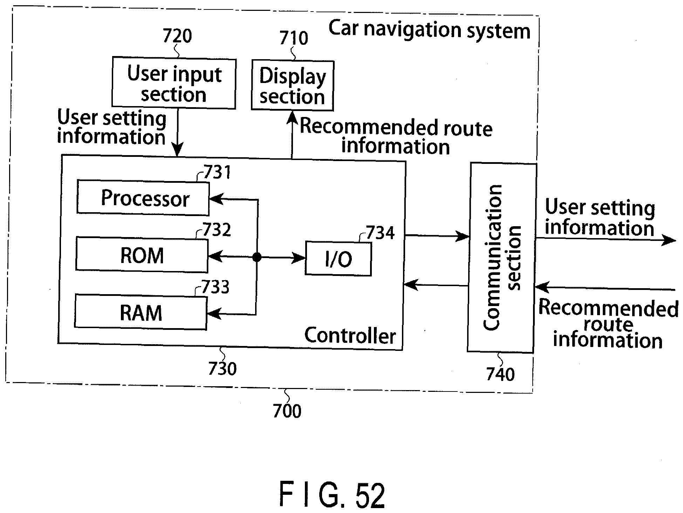

The first example is explained. FIG. 51 is a block diagram of the reservation system 1 according to this example, and FIG. 52 is a block diagram of the car navigation system 700.

As illustrated in this drawing, the smartphone 200 of FIG. 30 explained in the fifth embodiment is omitted from the reservation system 1 of this example, and the functions of the smartphone 200 are implemented by the car navigation system 700. The car navigation system 700 therefore receives an input of the user setting information 436 from the user input section 720, and transmits it to the server 400. The communication section 740 receives the recommended route information from the server 400, and displays it on the display section 710.

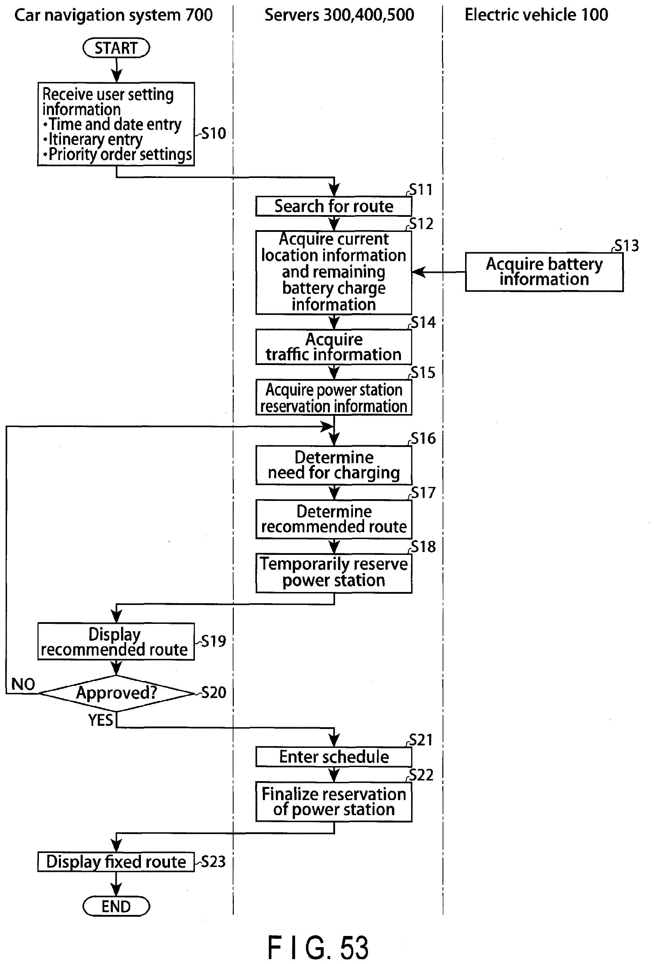

FIG. 53 is a flowchart of the operations of the reservation system 1 according to the present embodiment, which corresponds to FIG. 32 of the fifth embodiment and FIG. 8 of the first embodiment. In this example, as illustrated in this drawing, the operations executed at steps S10, S19, S20, and S23 in the first embodiment are executed by the car navigation system 700. Other operations are executed in the same manner as explained in the first and fifth embodiments.

### 6.2 Example 2

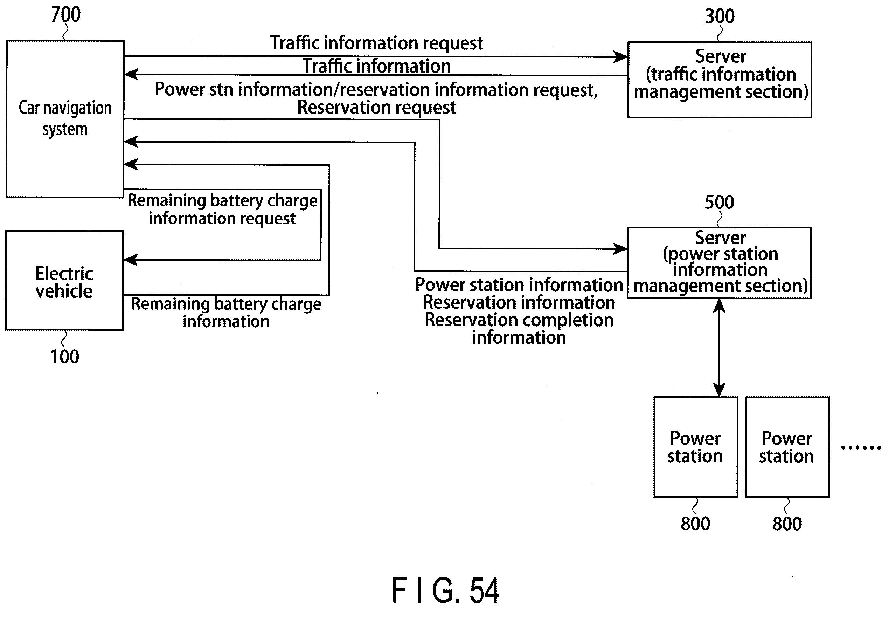

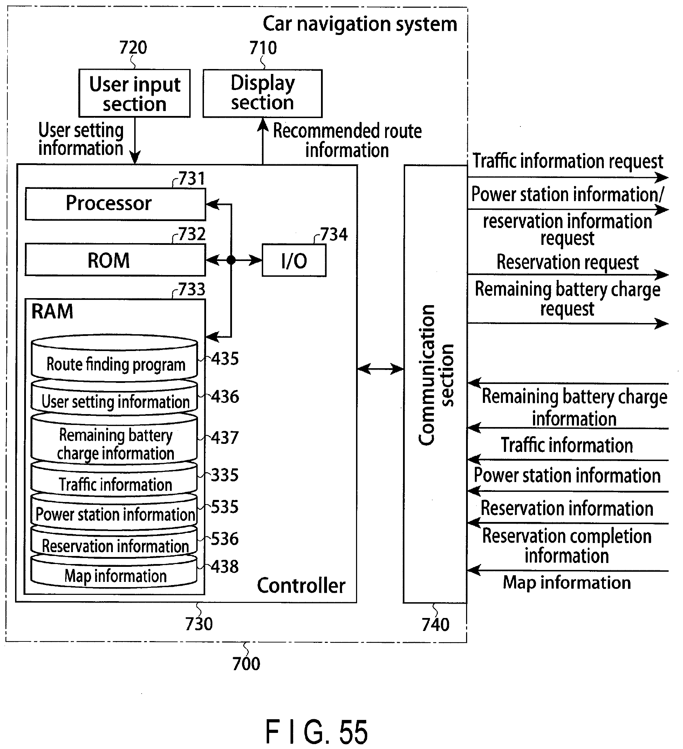

The second example is explained. FIG. 54 is a block diagram of the reservation system 1 according to this example, and FIG. 55 is a block diagram of the car navigation system 700.

As illustrated in these drawings, the server 400 in FIG. 51 explained in the first example is omitted from the reservation system 1 in this example, and the functions of the server 400 are implemented by the car navigation system 700. This example can also be considered as the structure of FIG. 26 explained in the fourth embodiment, in which the smartphone 200 is replaced with the car navigation system 700. Thus, in the same manner as the smartphone 200 of FIG. 27, the car navigation system 700 of FIG. 55 may store various kinds of data and the route finding program 435, which are stored in the RAM 433 of the server 400 as explained with reference to FIG. 6A, in the RAM 733 in the structure of FIG. 31. In this manner, the car navigation system 700 realizes the function of the server 400. Specifically, the car navigation system 700 executes the operations executed by the server 400 in the fourth embodiment, including:
- Acquiring traffic information from the server 300
- Acquiring power station information, reservation information, and reservation completion information from the server 500
- Reserving a power station
- Acquiring remaining battery charge information from the electric vehicle 100
- Computing recommended route

FIG. 6B explained in the first embodiment provides a functional block diagram of the processor 731 (or entire controller 730) of the car navigation system 700 when implementing the route finding program 435. That is, when implementing the program 435, the processor 731 functions as the reception section 450, first search section 451, second search section 452, first determination section 453, reservation section 454, and second determination section 455.

In this example, the program 435 and map information 438 may be downloaded from the server 300 or 500, or any other server (e.g., the server of the business entity that runs the reservation system of the present embodiment) to the car navigation system 700 via wireless communication line or wired communication line. Alternatively, the program 435 may be pre-stored in the RAM 733 at the time of sale of the car navigation system 700 to the user. The program may be installed in the RAM 733 of the car navigation system 700 by an information memory medium such as a CD-ROM or DVD.

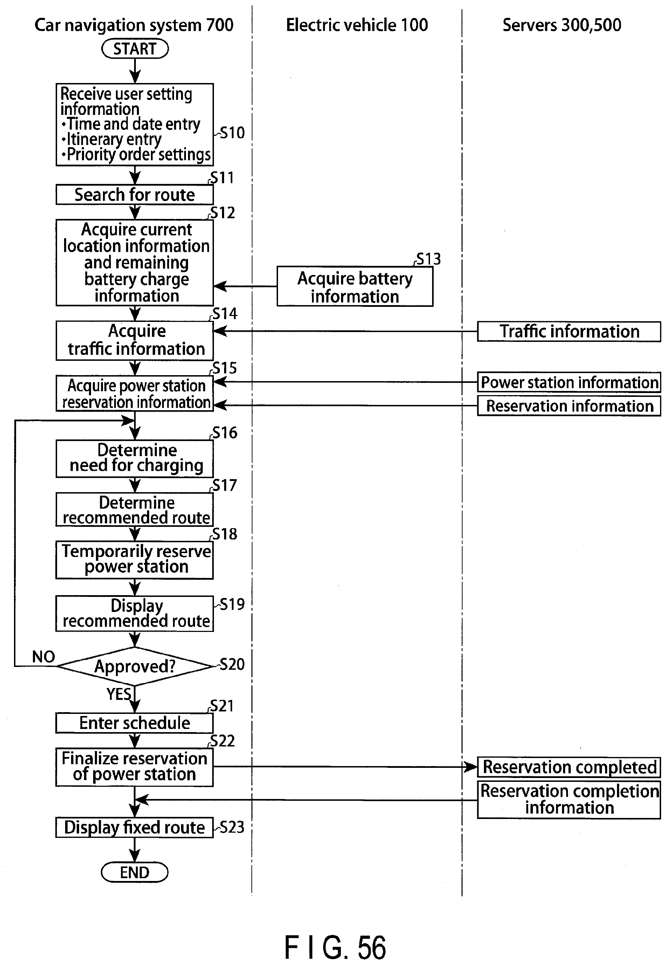

FIG. 56 is a flowchart of the operations of the reservation system 1 according to the present embodiment, which corresponds to FIG. 32 of the fifth embodiment and FIG. 28 of the fourth embodiment. In this example, as illustrated in the drawing, the operations at steps S10 to S12 and steps S14 to S23 of the first embodiment are executed by the car navigation system 700. The rest of the operations are the same as the first and fourth embodiments. In other words, all the operations of the smartphone 200 in FIG. 28 are executed by the car navigation system 700.

### 6.3 Effects of Present Embodiment

As discussed above, the reservation system 1 can be realized without a smartphone, by the car navigation system 700 configured to communicate with the server 400 or the servers 300 and 500. The present embodiment comes in handy especially when accessing the reservation system 1 when riding the electric vehicle 100.

In the present embodiment, the operations of the first embodiment are executed mainly by the car navigation system 700. The car navigation system 700, however, may be configured to execute the operations explained in the second embodiment.

The car navigation system 700 may be configured to execute the operations explained in the third embodiment. If this is the case, the RAM 733 of the car navigation system 700 further stores a scheduling program. When this scheduling program is implemented, the processor 431 (or the entire controller 730) of the car navigation system 700 realizes the functions illustrated in FIG. 19A. The diagrams of FIGS. 20 to 25 are displayed on the display section 710 of the car navigation system 700. The scheduling program may be downloaded from any server, or may be stored in the RAM 733 at the time of sale to the user.

### 7. Modification Examples

As described above, the information processing device according to the present embodiments is to make a reservation for a power station at which the battery of an electric vehicle is charged. The information processing device (200, 400, or 700) includes a reception section (450 in FIG. 6B) configured to receive first information (437 in FIG. 6A) indicating the remaining battery charge of the electric vehicle, second information (436 in FIG. 6A) relating to a destination, and third information (traffic information 335 in FIG. 6A) relating to a route to the destination; a first search section (451 in FIG. 6B) configured to search for a recommended route to the destination based at least on the second information (destination 436 in FIG. 6A) and third information (traffic congestion 335 in FIG. 6A); a second search section (452 in FIG. 6B) configured to search for a power station on the way to the destination; a first determination section (453 in FIG. 6B) configured to determine whether the battery will need to be charged before reaching the destination, based on the first information (437 in FIG. 6A) and the found recommended route; and a reservation section (454 in FIG. 6B) configured to, when the first determination section determines that the battery will need to be charged (S16 in FIG. 8), make a reservation for any of the power stations found by the second search section, without waiting for a command from the user (S18 in FIG. 8).

With such a structure, the information processing device makes a suitable reservation for a power station in accordance with the remaining battery charge and the like. Thus, a reservation of a power station can be effectively made. Furthermore, the device offers a sense of security to the user who is riding the electric vehicle without having to pay attention to the remaining battery charge.

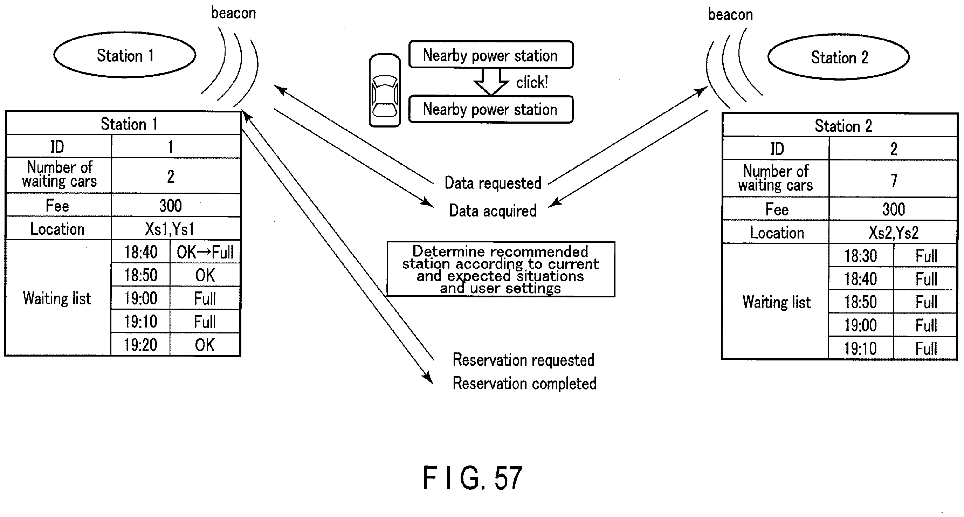

The above embodiments are discussed merely as examples, and can be modified in various manners. FIG. 57 shows an example of the information stored in power stations 800. As illustrated in this drawing, the power stations 800 (station 1 and station 2) store the following information:
- ID: Identification number of power station
- Number of vehicles waiting: Number of currently waiting vehicles
- Fee: Charging price
- Location: Coordinates of location of power station
- Reservation list: Current reservation state

The information processing device (smartphone 200, server 400, or car navigation system 700) receives the above information from the power stations 800 located in the vicinity of the currently set route, as the power station information 535 and reservation information 536. The device determines a recommended power station 800, based on the present condition and expected condition (such as congestion), and requests a reservation for the determined power station 800 based on the user setting information 436 (Station 1 in the example of FIG. 57). If the user wishes to know a nearby power station 800 during the journey, a power station search button may be pressed on the smartphone 200 or car navigation system 700. Then, the smartphone 200 or the communication section 740 of the car navigation system 700 receives a beacon from the power stations 800, and locates two power stations (Station 1 and Station 2) in the example of FIG. 57. The smartphone 200 or the communication section 740 therefore requests the power station information 535 and reservation information 536 from these stations. When there are multiple power stations, the information processing device identifies the power stations from the ID assigned to each station.

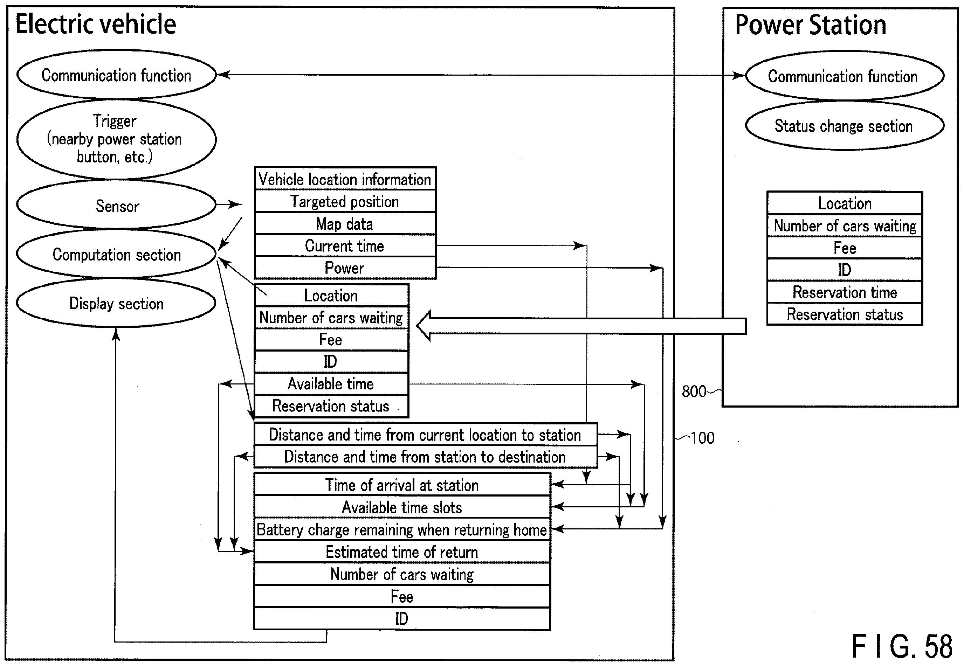

FIG. 58 is a block diagram of the electric vehicle 100 and power station 800, particularly showing the information stored therein. The electric vehicle 100 illustrated in FIG. 58 includes the smartphone 200 owned by the user who is riding the electric vehicle, and the car navigation system 700 installed in the electric vehicle.

First, as illustrated in this drawing, the power station 800 holds the information (location, number of vehicles waiting, fee, ID, reservation time and reservation state, etc.) as explained with reference to FIG. 57. The information may be transmitted to the electric vehicle 100 by the communication function of the power station 800. The power station 800 may be provided with the user input receiving function and a display section, in the same manner as the smartphone 200. With these functions, the power station 800 may receive the next charging reservation from the user. In other words, the charging reservation may be made not only from the smartphone (or car navigation system), but also from the power station 800.

The electric vehicle 100 is explained next. As illustrated in this drawing, the electric vehicle 100 acquires from sensors the location information of the vehicle, the destination location, the current time, and information relating to the remaining battery charge. The electric vehicle 100 further acquires the latest map data from the server. In addition, the electric vehicle 100 acquires, from the power station, information relating to the location, number of waiting vehicles, fee, ID, reservation time and reservation state. The computation section (processor) of the electric vehicle 100 computes from such information the distance between the current location and the power station and the time required, and further computes the distance from the power station to the destination and the time required. Accordingly, the power station arrival time, available time slots, remaining battery charge when returning home, and estimated time of return are found. In addition to these, the number of vehicles waiting, fee and ID are displayed on the display section. The electric vehicle 100 temporarily reserves any of the recommended power stations.

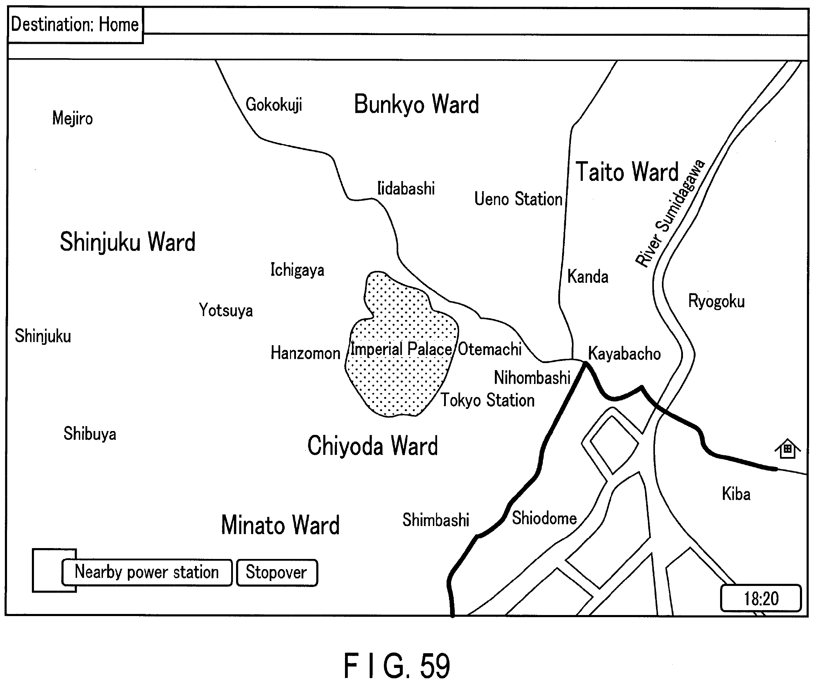

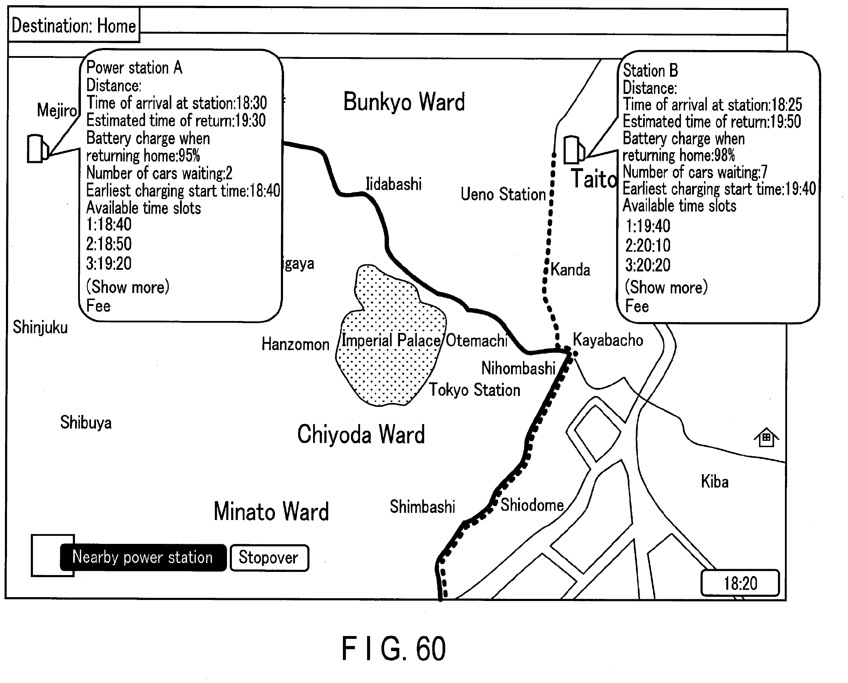

In the above embodiments, several examples of reserving a power station have been discussed. Various other usages may be possible. Such usages are explained with reference to FIGS. 59 to 66. In FIGS. 59 to 66, schematic diagrams of exemplary display screens of the smartphone 200 or car navigation system 700 are presented. In FIG. 59, a case of designating home as the destination is presented, where a route from the area of Shimbashi to home in Kiba is emphasized. When the user selects the display of "nearby power station" in the lower left corner of this screen, power stations A and B located in the vicinity of the route for home are displayed as search results, as illustrated in FIG. 60. The route to the power station A is indicated by a solid line, while the route to the power station B is indicated by a dashed line. Furthermore, the information processing device computes the station arrival time, estimated time of return, and remaining battery charge when returning home, and displays them on the display section for each case of selecting the power station A and the power station B. The number of vehicles waiting, the earliest possible charge start time, and available time slots received from each of the power stations A and B are also displayed on the display section.

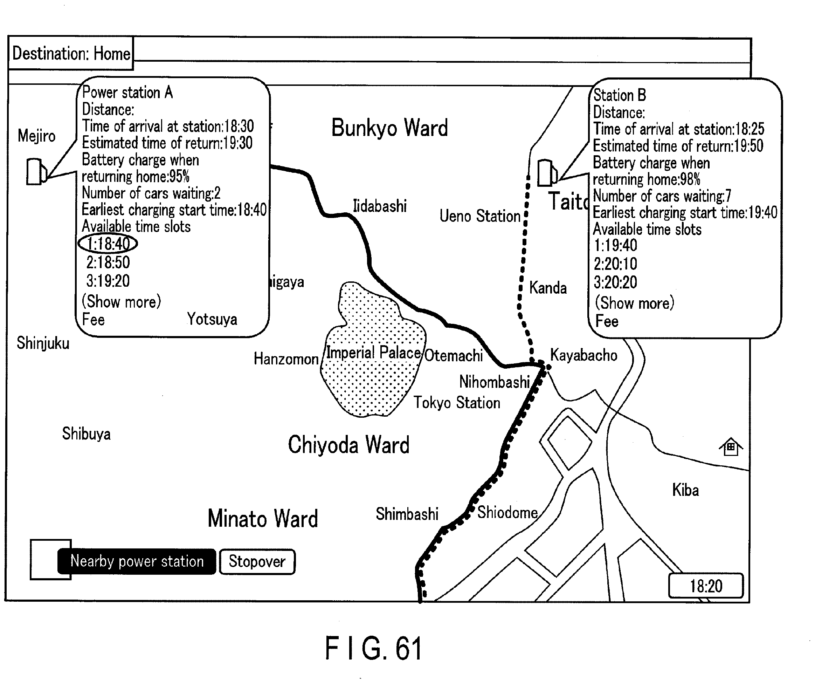

If the user's charge policy is to place a higher priority on the time of return even if the power station is farther away from the returning route, the information processing device makes a temporary or finalized reservation for the first recommended power station A (18:40), as illustrated in FIG. 61.

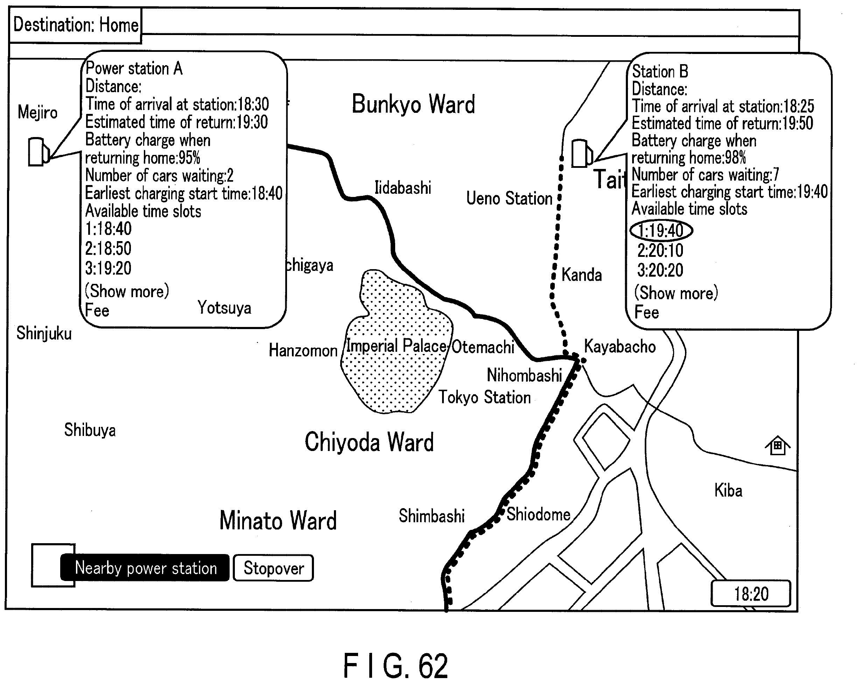

FIG. 62 shows a case of the user's charge policy that is to place a higher priority on the remaining battery charge at the time of return. As illustrated in this drawing, the remaining battery charge level is 95% when selecting the power station A, and 98% when selecting the power station B. The information processing device therefore makes a temporary or finalized reservation 1 for the first recommended power station B (19:40).

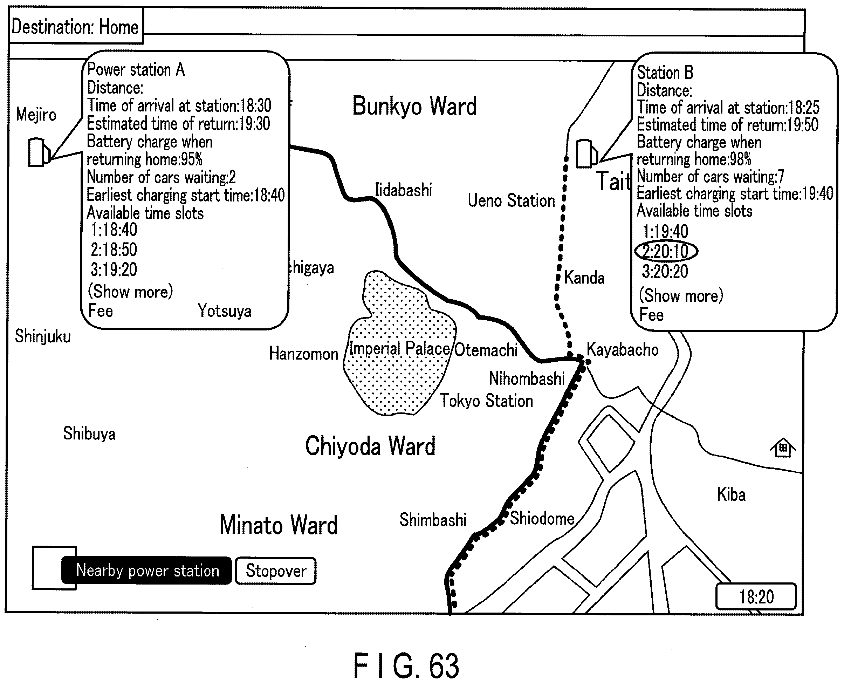

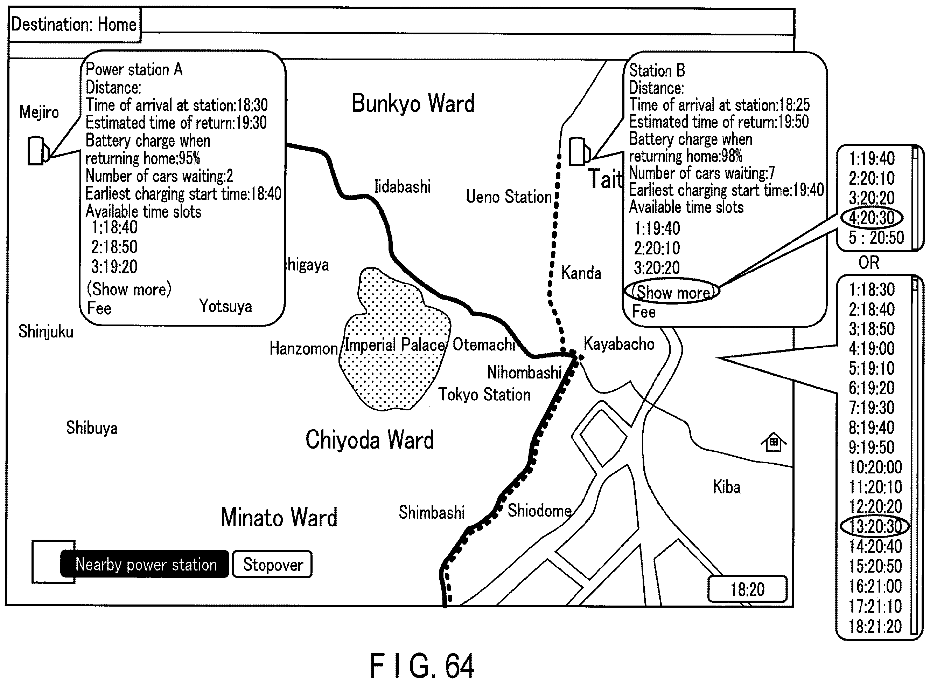

FIG. 63 shows a case of the user's charge policy that is to place a higher priority on the remaining battery charge at the time of return, and also not to make a charging reservation in the earliest time slot, for example, because there is an errand to finish during the waiting time. As illustrated in this drawing, the information processing device makes a temporary or finalized reservation for the second recommended power station B (20:10). In the case of the charging policy in FIG. 63, it is preferable that the user be allowed to freely set the waiting time. Here, as illustrated in FIG. 64, other available charging time slots than the first to third recommendations can be displayed if the icon "Show more" is selected.

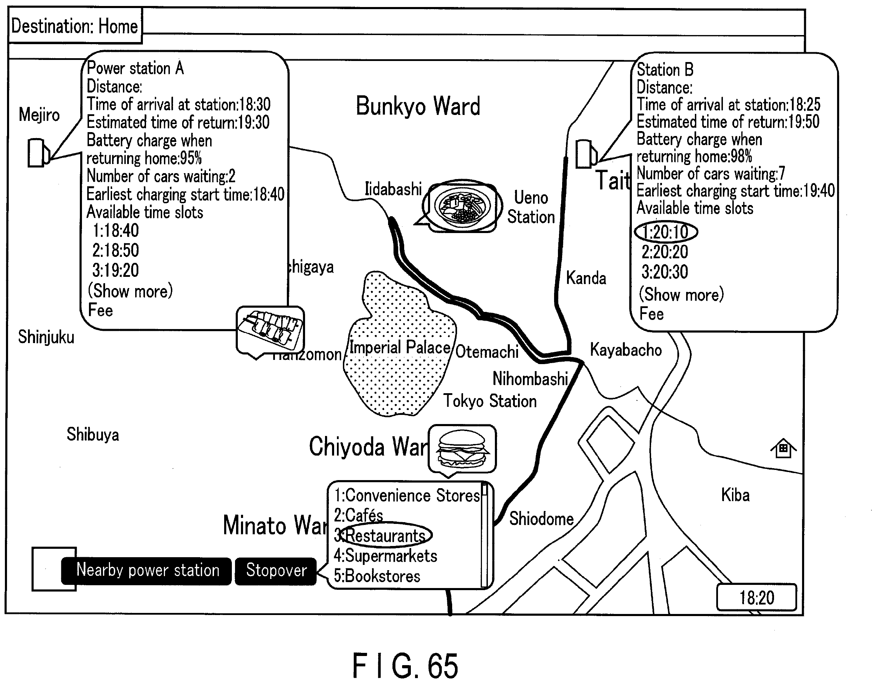

FIG. 65 shows a case in which the user makes a stopover for a meal. As illustrated in this drawing, the icon "stopover" on the lower left side of the screen may be selected to display recommended restaurants near the route. If the user selects any of these, the electric vehicle 100 cancels the reservations up to this point, and automatically changes a reservation to a later time. For example, when the power station B is originally reserved for 19:40 in FIG. 62, the electric vehicle 100 cancels this reservation, and re-enters a reservation for the power station B at 20:10, as illustrated in FIG. 65. In accordance with this reservation change, the power station arrival time and expected time of return may be re-computed. The information of restaurants may be downloaded from a server to the information processing device via the network 600 by wireless communication.

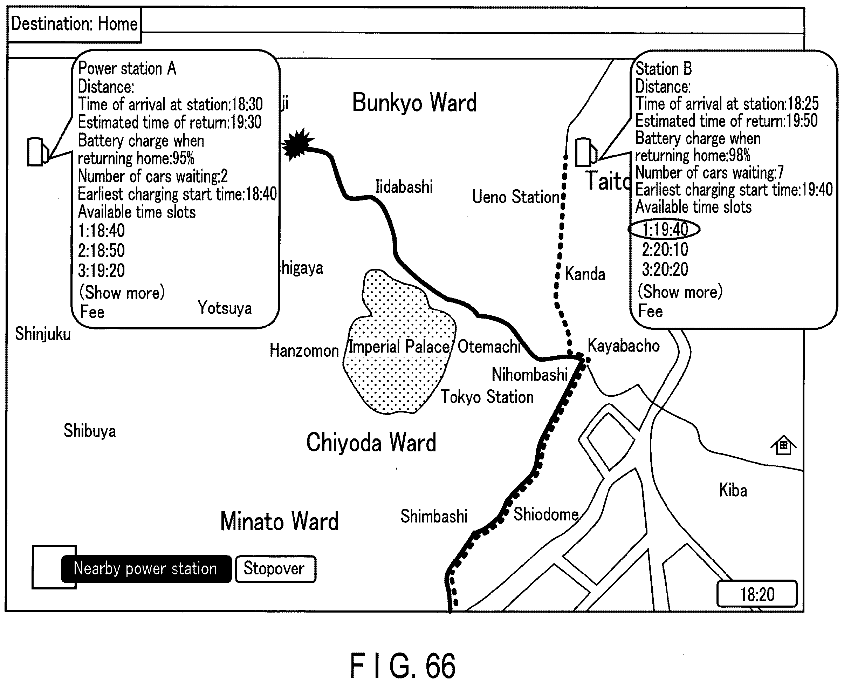

FIG. 66 shows a case in which the power station A is originally reserved at 18:50 as illustrated in FIG. 61, but the route to the power station A is closed due to an accident or the like. If this is the case, the electric vehicle 100 cancels the reservation of the power station A, and makes a temporary or finalized reservation for the currently most recommended power station. In the example of FIG. 66, the electric vehicle 100 makes a temporary or finalized reservation for the power station B at 19:40.

In the second embodiment, an exemplary case of being unable to arrive at the power station by the originally reserved time is given. The second embodiment may be applied to a case of arriving at the power station earlier than the originally reserved time. That is, when the information processing device (second determination section) determines that, contrary to the traffic information and expected congestion, the vehicle is going to arrive at the power station at a time earlier than expected, the reservation section may cancel the current reservation, and make a temporary or finalized reservation for the time slot earlier than the original reservation. If this is the case, the information processing device may display a message on the display, such as "Change reservation?" and prompt the user to approve.

Furthermore, with the current reservation, the user may need to wait at the power station for some time. In such a case, if someone cancels a time slot that is more suitable for the user, the information processing device receives this information as reservation information from the server 500, and automatically moves the current reservation up to the canceled and now available time slot. In this case, the moved reservation may be made as a temporary reservation, and a request may be sent to the user for approval of the finalization.

Furthermore, the information processing device may be configured to receive an interrupt reservation request from the user. For example, if the user wishes to make a reservation for a time slot that has already been reserved by another user, the information processing device receives an interrupt request. The information processing device may notify the user who has made the reservation for this time slot, of an interrupt request being issued, as part of the reservation information. If the user accepts this interrupt request, the information processing device transmits this information to the server 500 to instruct the change of the reservation. If this is the case, the user who gives way to another user for the reservation may be given a discount for the next electric charging rate, or an additional fee may be applied to the interrupting user.

As discussed above, the information processing device automatically reserves the presumably most suitable power station at every occasion, in accordance with the user's preference. This will save the user from the inconvenience of reserving a power station, and even if an unexpected situation arises, the user does not need to be concerned about the reservation of a power station. This significantly improves the usability of the electric vehicle.

Various functions explained in the above embodiments may be implemented by hardware, or by a combination of software and hardware. If the functions are implemented by software, such functions may be stored as one or more commands or codes (programs) in a computer-readable memory medium, or transmitted by the memory medium. The memory medium is not limited to any particular type as long as it is accessible from a computer or processor. Examples of the memory media include a RAM, ROM, EEPROM (Trademark) (including a USB memory and memory card), optical disk such as CD-ROM, and magnetic disk such as hard disk. The programs may be transmitted by wireless or wired electric communication line. The same applies to various types of data.

The embodiments of the present invention have been explained. These are presented merely as examples and are not intended to restrict the scope of the invention. These embodiments may be realized in various other forms, and various omissions, replacements, and changes can be made without departing from the gist of the invention. Such embodiments and modifications are included in the scope and gist of the invention, and are included in the scope of the invention described in the claims and its equivalence.

## Claims

1. An information processing device which makes a reservation of a power station to charge a battery of an electric vehicle, the device comprising:
a reception section configured to receive first information indicating a remaining battery charge of the electric vehicle, second information indicating a destination, and third information indicating a route to the destination;
a first search section configured to search for a recommended route to the destination, based at least on the second information and the third information;
a second search section configured to search for a power station located on a way to the destination;
a first determination section configured to determine whether or not the battery needs to be charged before arriving at the destination, based on the first information and the recommended route that has been found; and
a reservation section configured to, when the first determination section determines that the battery needs to be charged, reserve a power station found by the second search section, without waiting for a command from a user.

2. The information processing device according to claim 1, further comprising a second determination section configured to determine whether or not an arrival at the power station will be on time as reserved, based on the third information,
wherein, when the second determination section determines that the arrival at the power station will not be on time as reserved, the reservation section cancels the reservation and makes another reservation for a power station which is next recommended, without waiting for a command from the user.

3. The information processing device according to claim 1 or 2, wherein the third information is current traffic information and/or expected traffic information relating to a plurality of routes to the destination.

4. An information processing device which makes a reservation of a power station to charge a battery of an electric vehicle, the device comprising:
an entry section configured to enter first information indicating a first ride scheduled duration of a first ride reservation for the electric vehicle, and second information indicating a remaining battery charge at a time of riding;
a first determination section configured to determine whether or not the battery needs to be charged within the first ride scheduled duration, based on the second information; and
a reservation section configured to make a reservation of a power station when the first determination section determines that the battery needs to be charged, without waiting for a command from a user.

5. The information processing device according to claim 4, wherein the entry section enters third information indicating a destination of the first ride reservation,
the information processing device further comprising:
a first search section configured to search for a recommended route to the destination; and
a second search section configured to search for the power station located on a way to the destination, and
wherein, when the first determination section determines that the battery needs to be charged when traveling along the recommended route, the reservation section reserves the power station found by the second search section, without waiting for a command from the user.

6. The information processing device according to claim 4 or 5, wherein the entry section enters a second ride reservation for a time earlier than the first ride reservation, and
when the first determination section determines that the battery needs to be charged within a second ride scheduled duration of the second ride reservation and that the battery does not need to be charged within the first ride scheduled duration, the reservation section cancels the reservation of the power station for the first ride reservation.

7. The information processing device according to claim 1 or 4, wherein the reservation made by the reservation section without waiting for a command from the user is a temporary reservation, and
after making the temporary reservation, the reservation section switches the temporary reservation to a finalized reservation when receiving an approval from the user.

8. An information processing device which makes a reservation of a power station to charge a battery of an electric vehicle, the device comprising:
a control section configured to search for a route to a destination and to make a reservation for a power station located on the route; and
a display section configured to display the route,
wherein the display section is further configured:
to display a plurality of power stations on the found route to the destination as candidate power stations, and a first recommended power station of the power stations;
to display a temporary reservation having been made for the first recommended power station, and a prompt for an approval of switching the temporary reservation to a finalized reservation; and
to display, when receiving the approval, the route with the first recommended power station for which the temporary reservation has been switched to a finalized reservation.

9. The information processing device according to claim 8, wherein when the control section determines that the electric vehicle will not arrive at the first recommended power station as reserved, and
the display section displays a temporary reservation having been made for a second recommended power station different from the first recommended power station, and a prompt for an approval of switching the temporary reservation to a finalized reservation.

10. The information processing device according to claim 8, wherein the display section is further configured to display a second recommended power station that is different from the first recommended power station, and
when receiving a denial of the first recommended power station and selection of the second recommended power station, the display section displays a route to the destination via the second recommended power station.

11. The information processing device according to one of claims 8 to 10, wherein the display section is further configured to display the first recommended power station and an available time slot for the first recommended power station.

12. An information processing method to make a reservation of power stations charging a battery of an electric vehicle, the method comprising:
receiving first information indicating a remaining battery charge of the electric vehicle, second information indicating a destination, and third information indicating a route to the destination;
searching for a recommended route to the destination, based at least on the second information and the third information;
searching for a power station located on a way to the destination;
determining whether or not the battery needs to be charged before arriving at the destination, based on the first information and the recommended route; and
reserving the power station when it is determined that the battery needs to be charged, without waiting for a command from a user.

13. An information processing program to make a reservation of a power station charging a battery of an electric vehicle, the program, when being executed by a processor, causing the processor to:
receive first information indicating a remaining battery charge of the electric vehicle, second information indicating a destination, and third information indicating a route to the destination;
search for a recommended route to the destination, based at least on the second information and the third information;
search for a power station located on a way to the destination;
determine whether or not the battery needs to be charged before arriving at the destination, based on the first information and the recommended route; and
when it is determined that the battery needs to be charged, reserve the power station, without waiting for a command from a user.
